# EUROPÄISCHE PATENTSCHRIFT

(11) **EP 3 937 838 B1**
(45) Veröffentlichungstag und Bekanntmachung des Hinweises auf die Patenterteilung: **14.08.2024**
(21) Anmeldenummer: 20712224.3
(22) Anmeldetag: 09.03.2020
(51) Int. Cl.: A61C 9/00, A61C 19/045

(54) **VORRICHTUNG UND VERFAHREN ZUR ERFASSUNG VON KIEFERRELATIONSDATEN**
DEVICE AND METHOD FOR DETECTING JAW RELATION DATA
DISPOSITIF ET PROCÉDÉ D'ENREGISTREMENT DE DONNÉES DE RELATION MAXILLAIRE

(30) Priorität: 13.03.2019 DE 102019106403
(43) Veröffentlichungstag der Anmeldung: 19.01.2022
(73) Patentinhaber: Schlieper, Jörg, 24558 Henstedt-Ulzburg (DE)
(72) Erfinder: Schlieper, Jörg, 24558 Henstedt-Ulzburg (DE)
(74) Vertreter: Schmitt-Nilson Schraud Waibel Wohlfrom Patentanwälte Partnerschaft mbB
(86) Internationale Anmeldenummer: PCT/EP2020/056140
(87) Internationale Veröffentlichungsnummer: WO 2020/182702

(56) Entgegenhaltungen:
- WO-A1-2019/043633
- WO-A1-98/26736
- US-A- 3 382 581
- US-A1- 2005 175 954

## Beschreibung

Die vorliegende Erfindung betrifft eine Vorrichtung zur Erfassung von Kieferrelationsdaten eines Menschen. Ferner betrifft die Erfindung auch ein Verfahren zur Erfassung von Kieferrelationsdaten eines Menschen.

Die Bereitstellung von Kieferrelationsdaten, d.h., eine räumliche Relation beider Kiefer zueinander und damit die räumliche Relation der einzelnen Zahnkronen beider Kiefer zueinander, ist für die Herstellung von Schienen auf dem Gebiet der Zahnmedizin und Mund-Kiefer-Gesichtschirurgie, zur Anfertigung von Zahnersatz auf dem Gebiet der Prothetik, von Kieferregulierungen auf dem Gebiet der Kieferorthopädie, von Kiefergelenksschienen auf dem Gebiet der Funktionstherapie und von Unterkieferprotrusionsschienen auf dem Gebiet der zahnärztlichen Schlafmedizin unerlässlich.

Zur Erfassung der Kieferrelationsdaten wird zwischen einer statischen und einer dynamischen Kieferrelation unterschieden: Die statische Kieferrelation ist die Abbildung einer statischen Situation mittels statischen dreidimensionalen Positionsdaten, d.h., die Abbildung einer Relation der Position des Unterkiefers zum Oberkiefer. Die dynamische Kieferrelation ist die Abbildung eines dynamischen Situationsablaufs mittels dynamischen dreidimensionalen Positionsdaten, d.h., die Abbildung mehrerer Relationen der Position des Unterkiefers zum Oberkiefer innerhalb eines Bewegungsablaufs.

Sowohl die statische als auch die dynamische Kieferrelation lassen sich am Probanden mithilfe von Vorrichtungen durch passive oder aktive sowie analoge oder digitale Verfahren ermitteln bzw. registrieren. Bei den passiven Verfahren gibt der Untersucher, bspw. der Arzt, die Position und/oder die Bewegung des Unterkiefers des menschlichen Probanden, z.B. durch manuelle oder instrumentelle Führung, vor. Das bedeutet, dass der Proband die statische bzw. dynamische Kieferrelation nicht selbstständig einnimmt bzw. durchführt. Im Gegensatz hierzu führt der Proband diese Bewegungen bei dem aktiven Verfahren selbstständig, ggf. nach Anweisung des Untersuchers, durch bzw. nimmt die Kieferrelationsstellung selbstständig ein. Es gibt auch Mischformen, bei denen der Proband bspw. selbstständig, d.h. aktiv, eine statische Kieferrelation einnimmt und in dieser passiv gehalten wird oder der Proband aktiv, aber unter Führung einen Situationsablauf durchführt.

Die analogen bzw. digitalen Verfahren können nochmals unterschieden werden zwischen analogen bzw. digitalen Verfahren der statischen Kieferrelation und analogen bzw. digitalen Verfahren der dynamischen Kieferrelation. Bei einem analogen Verfahren der statischen Kieferrelation kommen ein Abdruck mit Abdruckmaterialien oder analoge Messsysteme zum Einsatz. Bei einem analogen Verfahren der dynamischen Kieferrelation kommen mehrere Abdrücke mit Abdruckmaterialien oder analoge Messsysteme zum Einsatz. Bei einem digitalen Verfahren der statischen oder der dynamischen Kieferrelation kommen digitale Messsysteme, wie bspw. Ultraschall, Hochfrequenz, oder Lichtscanner, insbesondere sogenannte Intraoralscanner, etc., zum Einsatz. Hierbei ist auch eine Kombination von analogen mit digitalen sowie passiven und aktiven Verfahren möglich. Dabei sind die jeweiligen Vorrichtungen auf das jeweilige Verfahren abzustimmen.

Die Vorrichtungen dienen in der Regel der Optimierung lediglich eines oder mehrerer dieser Verfahren und zur Nutzbarmachung der analogen und/oder digitalen Verfahren im Verfahrensablauf. Üblicherweise kommen als Vorrichtungen in solchen Verfahrensabläufen Bissgabeln zum Einsatz.

Aus der DE 103 31 531 A1 und der DE 42 92 389 B4 sind zwei Bissgabeln bekannt, die ein eingeschränktes aktives, statisches und ausschließlich analoges Verfahren zur Bestimmung der Kieferrelation unterstützen. Ein kombiniertes aktives/passives Verfahren ist nur in Bezug auf die Unterkieferprotrusion, also den Unterkiefervorschub bzw. die anterior-posterior Kieferrelation, möglich, wobei der Proband mit dem Unterkiefer eine aktive Protrusionsbewegung in eine bestimmte gewünschte Kieferrelation hinein durchführt, in der er dann mittels der Bissgabel quasi passiv gehalten wird. Eine variable Bisssperrung, welche ein vertikaler Abstand zwischen den Ober- und Unterkieferzähnen beschreibt, also eine craniocaudale Kieferrelation ist nicht einstellbar. Dies ist insofern ungünstig, als dass die Bissgabel händisch am Patienten für eine gewünschte Kiefersperrung umgearbeitet werden muss. Dies benötigt Zeit und ist zudem wegen des Arbeitens im Mund des Probanden für diesen unangenehm. Ist die Änderung erfolgt und entspricht nach der Kontrolle im Mund nicht den Anforderungen, so ist eine erneute Änderung (mit den genannten Nachteilen) erforderlich.

Ein weiterer Nachteil ergibt sich aus der ausschließlich analogen Registrierung der Kieferrelation mit Abdruckmaterial, wenn die Bisssperrung einen Intraoralscan gleichzeitig von Ober- und Unterkieferzähnen nicht mehr ermöglicht. Ferner eignen sich diese Bissgabeln nicht für ein sicheres Verfahren zur aktiven Registrierung, da keine sichere Fixierung von Oberkiefer- zu Unterkieferzähnen zustande kommt. Dies ist dadurch bedingt, dass die Vorrichtungen zur Verkippung neigen, da sie nur zwischen den Okklusalflächen, also den Kauflächen, der Oberkiefer- und Unterkieferzähne vermittelt mit Abdruckmasse positioniert werden, also nicht die gesamten Zahnkronen vermittelt mit Abdruckmaterial für eine bessere Retention umfassen. Insbesondere die in der DE 42 92 389 B4 offenbarte Bissgabel weist durch die Verwendung von zwei aufeinanderliegenden Elementen eine vergrößerte Bisssperrung zur Positionierung der Kieferrelation auf. Es ist zwar in der DE 103 31 531 A1 eine innenliegende Führung vorgesehen, die eine verkleinerte Bisssperrung ermöglicht, die jedoch unter Anwendung, der Bisskraft häufig nicht standhält.

Aus der DE 10 2014 102 770 A1 ist eine Vorrichtung bekannt, die ein aktives, dynamisches und digitales Verfahren zur Registrierung der Kieferrelation, jedoch kein passives, statisches oder dynamisches Verfahren (Fixierung bzw. Führung des Unterkiefers in einer bestimmten Position bzw. in einer bestimmten Bewegung zum Oberkiefer) unterstützt. Dies ist insofern ungünstig, als dass sich eine vom Probanden eingenommene Unterkieferposition während der Zeit der Registrierung der Kieferrelation (aktives Verfahren) verändern kann. Aufgrund fehlender Fixierung oder Abstützung der Unterkieferposition gegenüber dem Oberkiefer kommt es regelmäßig zu Abweichungen durch willkürliche bzw. unbeabsichtigte Bewegung des Unterkiefers des Probanden, wodurch eine analoge Registrierung mit z. B. Abdruckmaterial unmöglich wird.

Somit ist die Registrierung der Kieferrelation bei dieser Vorrichtung ausschließlich nach dem digitalen Verfahren möglich. Ferner ist die nicht direkt im Probandenmund zu registrierende räumliche Position der Bissgabel, und damit die Position der Registriereinrichtung in Bezug auf den Oberkiefer von Nachteil. Die Registriereinrichtung ist an einer Oberkieferbissgabel angebracht, deren räumliche Position zu den Zähnen bestimmt werden muss. Die Oberkieferbissgabel ruht vermittelt durch Abdruckmaterial auf den Oberkieferzahnkronen.

Für die räumliche Positionsbestimmung der Bissgabel zu den Zähnen muss die Bissgabel aus dem Mund des Probanden herausgenommen und der gesamte abdruckseitige Anteil der Bissgabel mit den Positionierungsmarkerelementen der Bissgabel scanoptisch für die Überlagerung mit dem Zahnkronenscan erfasst werden. Durch diesen analogen Schritt der Übertragung der analogen Information des Oberkieferzahnabdrucks in digitale Daten für die Überlagerung mit den digitalen Daten des Scans der Oberkieferzahnkronen verlässt dieses System den ausschließlich digitalen Arbeitsablauf, welcher nachfolgend auch als volldigitaler Arbeitsablauf bezeichnet wird, und führt zu Fehlern, welche sich später bei der Registrierung der Kieferrelation als Ungenauigkeiten auswirken können.

Die DE 10 2010 021 934 A1 offenbart ein Registriersystem zur aktiven, dynamischen und digitalen Erfassung der Kieferrelation. Eine im Mittelgesicht positionierte Messeinheit wird über eine paraokklusale Oberkieferbissgabel mit Messeinheit mittels elektronischer Sensoren schädelbezüglich justiert, so dass nach Wechseln der Messeinheit von der Oberkiefer- auf die Unterkieferparaokklusalbissgabel die Registrierung der Kieferrelation mit der Messeinheit im Mittelgesicht schädelbezüglich gelingt. Nachteilig ist hierbei die fehlende Möglichkeit des aktiven, statischen sowie analogen Verfahrens zur Registrierung der Kieferrelation und das Erfordernis einer dritten Messeinheit im Mittelgesicht.

Die bei der DE 10 2010 021 934 A1 zur Anwendung kommenden Paraokklusalbissgabeln sind in der Zahnmedizin weit verbreitet und bekannt. Grundsätzlich erfolgt die Herstellung derartiger Bissgabeln auf individuellen Kiefermodellen im zahntechnischen Labor und sind aufwendig und kostspielig. In der Herstellung vereinfachte und damit zeitsparendere und kostengünstigere Paraokklusalbissgabeln sind mechanisch weniger belastbar als die laborgefertigten Paraokklusalbissgabeln.

US 2005/175954 A1 betrifft ein diagnostisches Gerät zur Unterkiefer-Reposition, bei dem ein mit Öffnungen versehener Rahmen und ein Arm jeweils an Ober- und Unterkieferschalen befestigt sind, und der Arm über einen Ratschenzahnriemen mit einem Schieberträger gekoppelt ist, der innerhalb der Rahmenöffnung gehalten wird. Durch das Durchziehen des Gurtes durch einen Rastkopf am Träger (16) wird der Abstand zwischen Arm und Rahmen schrittweise verringert. Ein Ratschenzahnband, das sich längs der Öffnung von dem Träger erstreckt, wird durch einen Rastkopf am Rahmen gezogen, um den Träger zu ziehen, und mit ihm den Arm und die Unterkieferschale relativ zur Oberkieferschale schrittweise nach vorne. Der Träger ist quer zur Öffnung bewegbar, um eine seitliche Bewegung zwischen den Kiefern des Patienten zu ermöglichen.

US 2005/175954 A1 betrifft ein diagnostisches Gerät zur Unterkiefer-Reposition, bei dem ein mit Öffnungen versehener Rahmen und ein Arm jeweils an Ober- und Unterkieferschalen befestigt sind, und der Arm über einen Ratschenzahnriemen mit einem Schieberträger gekoppelt ist, der innerhalb der Rahmenöffnung gehalten wird. Durch das Durchziehen des Gurtes durch einen Rastkopf am Träger (16) wird der Abstand zwischen Arm und Rahmen schrittweise verringert. Ein Ratschenzahnband, das sich längs der Öffnung von dem Träger erstreckt, wird durch einen Rastkopf am Rahmen gezogen, um den Träger zu ziehen, und mit ihm den Arm und die Unterkieferschale relativ zur Oberkieferschale schrittweise nach vorne. Der Träger ist quer zur Öffnung bewegbar, um eine seitliche Bewegung zwischen den Kiefern des Patienten zu ermöglichen.

US 3 382 581 A beschreibt ein wissenschaftliches Gerät zur Lokalisierung des richtigen Okklusionsbisses in natürlicher Position. Darin sind bei einer in die Mundöffnung eines Patieten einsetzbaren Vorrichtung zur Lokalisierung des richtigen Okklusionsbisses Finger vorgesehen, die in unterschiedlichen Ebenen in jeweils horizontaler Richtung und deren Abstand zueinander in vertikaler Richtung verstellt werden können.

Intraoralscanner erhalten immer mehr Eingang in die zahnärztliche Praxis. Ein Intraoralscanner ist bspw. aus der DE 196 40 495 C2 bekannt. Derartige Scanner arbeiten nach dem fotooptischen Prinzip, wobei dreidimensionale Objekte oder Bewegungsabläufe über repetitive Fotos aus unterschiedlichen Perspektiven, die zu einem räumlichen Gesamtbild zusammengefügt werden, erfasst werden können.

Es sind Intraoralscanner bekannt, die ein statisches sowie ein dynamisches, analoges Verfahren zur Registrierung der Kieferrelation ermöglichen und diese über ein vorbestimmtes Dateiformat, bspw. STL-Format, einer CAD/CAM-Technologie zugänglich machen. Zur Registrierung wird der Scanner seitlich mit seiner Optik auf die Ober- und Unterkieferzahnreihen gerichtet, während der Unterkiefer Bewegungen durchführt (aktives oder passives, digitales, dynamisches Verfahren). Bedingt durch die Abmessung des Geräts für die intraorale Anwendung ist der Erfassungsbereich der Scanoptik auf etwas mehr als eine Zahnkronenbreite beschränkt. Dies ermöglicht die Registrierung von Kieferrelationen nur in einem sehr kleinen Bereich zwischen der Kieferrelation im Schlussbiss, also im maximalen Kontakt zwischen den Ober- und Unterkieferzähnen, und der Kieferrelation mit Bisssperrung, in dem die Scanoptik noch für die Registrierung ausreichende Zahnkronenanteile von Ober- und Unterkiefer erfassen kann.

Für die Registrierung des Zahnbogens, d.h., aller Zahnkronen in einem Kiefer, stellt der Intraoralscanner mittlerweile das Verfahren erster Wahl dar. Hierbei wird vom Untersucher der Erfassungsbereich des Scanners über alle Zahnkronenflächen des Probanden bewegt und die einzelnen Scans, also (digitale) Bilder bzw. Fotos, zu einem dreidimensionalen Gesamtbild, dem Bild des Oberkiefer- oder Unterkieferzahnbogens, ggf. einschließlich von Zahnfleisch- und angrenzenden Mundschleimhautanteilen, zusammengefügt.

Dies zeigt, dass es bereits verschiedene Einrichtungen zur Registrierung von Kieferrelationsdaten gibt, welche jedoch bzgl. der umsetzbaren Verfahren beschränkt sind.

Aufgabe der Erfindung ist es, eine Vorrichtung zur Registrierung von Kieferrelationen bereitzustellen, die eine möglichst breite Anwendung, insbesondere, sowohl für aktive und passive, als auch für statische und dynamische sowie für analoge und digitale Verfahren, ermöglicht. Ferner ist es auch Aufgabe der Erfindung, ein effizientes Verfahren zum Registrieren von Kieferrelationsdaten unter Verwendung einer erfindungsgemäßen Vorrichtung bereitzustellen.

Die Erfindung betrifft eine Vorrichtung und ein Verfahren zur Erfassung von Kieferrelatioinsdaten eines Menschen gemäß den beigefügten Patentansprüchen.

Insbesondere enthält die Vorrichtung zur Erfassung von Kieferrelationsdaten eines Menschen mehrere Kieferrelationselemente, wobei sich ein erstes längliches Kieferrelationselement im am Menschen eingesetzten Zustand ventral erstreckt und zur Befestigung an einem Oberkiefer-Anlageelement, insbesondere an einer Oberkiefer-Bissgabel oder einem Abdrucklöffel bzw. Bisslöffel oder eine Paraokklusalbissgabel, konfiguriert ist; ein zweites längliches Kieferrelationselement sich relativ zum ersten Kieferrelationselement quer und caudal erstreckt, und einem dritten länglichen Kieferrelationselement (8), welches sich relativ zum zweiten Kieferrelationselement (7) quer und dorsal erstreckt, wobei das zweite Kieferrelationselement (7) in seiner Erstreckungsrichtung verschieblich mit dem ersten Kieferrelationselement (6) und das dritte Kieferrelationselement in seiner Erstreckungsrichtung verschieblich mit dem zweiten Kieferrelationselement derart verbunden ist, dass das zweite oder dritte Kieferrelationselement zur Auflage auf einer wenigstens Inzisal- oder Okklusalfläche von einer oder mehrerer Unterkiefer-Zahnkronen konfiguriert ist; oder dazu konfiguriert ist, nahe der Unterkiefer-Zahnkronen von einer digitalen Erfassungseinrichtung mit diesen zusammen erfassbar angeordnet zu sein.

Unter dem Begriff "länglich" ist in diesem Zusammenhang zu verstehen, dass die Erstreckungsrichtung des jeweiligen Kieferrelationselements in seine Längsrichtung größer ist als in seine Breiten- und/oder Dickenrichtung. Hierbei kann sich das Kieferrelationselement gerade, wellenförmig oder gekrümmt ausgebildet in die Längsrichtung erstrecken. Bspw. kann sich das Kieferrelationselement stabförmig oder leistenförmig in Längsrichtung erstrecken. Es kann auch gewunden oder spiralförmig ausgebildet sein. Das Kieferrelationselement kann einen kreisförmigen, ovalen, eckigen oder polygonen Querschnitt aufweisen.

Eine solche Vorrichtung hat den Vorteil, dass sie sowohl für aktive und passive sowie analoge und digitale Verfahren zur Kieferrelationsregistrierung bzw. zur Registrierung der Zahnkronen beider Kiefer zueinander, einsetzbar ist und somit einen breiten Anwendungsbereich bietet. Darüber hinaus gewährleistet die erfindungsgemäße Vorrichtung einen sicheren, verkippungs- und verwacklungsfreien Sitz für Anwendungen im gesamten Kieferrelationsspektrum, d.h., die Registrierung aller möglichen Unterkieferpositionen. Ferner ist die erfindungsgemäße Vorrichtung so konfektioniert, dass zeit- und kostenaufwendigere Arbeitsschritte auf Kiefermodellen oder weitergehende, aufwendigere Arbeitsschritte in einem zahntechnischen Labor nicht mehr erforderlich sind.

In Zeiten der digitalen Arbeitsprozesse ist es zudem von wirtschaftlichem Vorteil mit nur einem Registriersystem zu arbeiten, welches weit verbreitet ist. Im digitalen Arbeitsprozess sind Intraoralscanner für die Registrierung der Zahnkronen unerlässlich und deshalb auch weit verbreitet. Die erfindungsgemäße Vorrichtung zur Registrierung von Kieferrelationsdaten ist auch in Kombination mit solchen Intraoralscannern einsetzbar und ermöglicht somit durch die Verwendung derselben Scanner auch zur Registrierung der Kieferrelationen, ein besonders wirtschaftliches Arbeiten.

Insbesondere betrifft ein Aspekt der Erfindung auch ein Verfahren zur Erfassung von Kieferrelationsdaten eines Menschen unter Verwendung der erfindungsgemäßen Vorrichtung und einem Scanner, vorzugsweise einem Intraoralscanner, wobei zumindest eine Markierung im Grenzbereich zu den Zahnkronen am Oberkiefer-Anlagerungselement sowie zumindest eine je an dem ersten bis dritten Kieferrelationselement in dem jeweiligen Grenzbereich zueinander vorgesehen sind, die zur eindeutigen Erfassung von Positionen des zumindest einen Kieferrelationselements zur Ermittlung von Kieferrelationspositionen von dem Scanner erfasst werden.

Für den Fall, dass ein oder mehrere Inzisalstifte vorgesehen sind, können auch die Inzisalstifte je eine Markierung aufweisen die zur eindeutigen Erfassung von Positionen des einen oder der mehreren Inzisalstifte zur Ermittlung von Kieferrelationspositionen von dem Scanner erfasst werden.

Mit der erfindungsgemäßen Vorrichtung ist die Anwendung eines Verfahrens zur Erfassung von Kieferrelationsdaten somit in nur zwei Registrierschritten möglich, nämlich einem ersten Registrierschritt, bei dem eine Kiefer(gelenk)kopfzentrumsposition durch eine digitale Registrierung der Kieferrelation durch eine Rotationsbewegung des Unterkiefers bestimmt wird, und einem zweiten Schritt, bei dem die Kiefer(gelenk)kopfzentrumposition durch eine digitale Registrierung der Kieferrelation durch eine Unterkieferprotrusion bestimmt wird. Die Registrierung aller für die Herstellung der Hilfsmittel erforderlichen unterschiedlichen Kieferrelationen mit unterschiedlichen Unterkieferprotrusionen entfällt, da die unterschiedlichen Kieferrelationen aus dem Kiefergelenkbahnverlauf geometrisch berechnet werden können. Die gleichen Schritte können alternativ auch mit einer Unterkieferlaterotrusion statt einer Unterkieferprotrusion durchgeführt werden. Ebenso ist es denkbar, für die Registrierung sowohl einer Unterkieferprotrusion als auch eine Unterkieferlaterotrusion durchzuführen.

Vorzugsweise umfasst das erfindungsgemäße Verfahren zumindest folgende Schritte: (1) Bestimmen einer ersten Kieferkopfzentrumsposition durch eine aktive digitale Registrierung der Kieferrelation, bei der der Unterkiefer im Kiefergelenkkopfzentrum eine Rotationsbewegung ausführt; (2) Bestimmen einer ersten Strecke zwischen dem Kiefergelenkkopfzentrum und einem vorbestimmten mesialen Punkt am Unterkiefer; (3) Bestimmen einer zweiten Strecke zwischen dem vorbestimmten mesialen Punkt am Unterkiefer und einem vorbestimmten distalen Punkt am Unterkiefer; (4) Bestimmen eines Winkels zwischen der ersten Strecke und der zweiten Strecke; (5) Bestimmen der Positionen des vorbestimmten mesialen sowie des vorbestimmten distalen Punkts durch eine Unterkieferbewegung, vorzugsweise durch eine Unterkieferprotrusion oder eine Unterkieferlaterotrusion, unter Zuhilfenahme eines vorbestimmten Referenzpunkts am Unterkiefer; (6) Bestimmen einer zweiten Kiefergelenkkopfzentrumsposition unter Zuhilfenahme der ersten und zweiten Strecke sowie dem dazwischenliegenden Winkel; und (7) Bestimmen eines Kiefergelenkkopfbahnverlaufs.

Hierbei stellen die Verfahrensschritte (1) bis (5) den ersten Registrierschritt und die Verfahrensschritte (6) und (7) den zweiten Registrierschritt dar.

Bereits bekannte Verfahren können bspw. folgendermaßen ablaufen: (1) Erzeugen eines vollständigen Scans der gesamten Kieferrelationselemente und des Oberkiefer-Anlagerungselements, (2a) Erzeugen eines vollständigen Scans der Impressionen des im Oberkiefer-Anlageelements befindlichen, vermittelnden Abdruckmaterials mit den angrenzenden Strukturen des Oberkiefer-Anlageelements, oder (2b) Erzeugen eines vollständigen Scans des Oberkiefer-Anlagerungselements und der von ihm ausgesparten Zahnkronenanteile, (3) Erzeugen eines vollständigen Scans der Oberkieferzahnkronen und Unterkieferzahnkronen, und (4a) Erzeugen eines Scan im Grenzbereich zwischen einerseits dem dritten Kieferrelationselement und/oder mindestens eines Inzisalstifts und andererseits von Unterkieferzahnkronen und/oder Unterkieferzahnkronenanteilen, oder (4b) Erzeugen eines vollständigen Scans der Oberkiefer-Anlageelements und der Unterkieferzahnkronen und/oder der Unterkieferzahnkronenanteile; wobei bei Verwendung des Schritts (4b) auf den Schritt (1) verzichtet werden kann.

Die Kieferrelation wird hier durch die jeweilige digital stattfindende Überlagerung der Datensätze der digitalen Scans bestimmt. Das Verfahren zur Überlagerung der Datensätze (d.h., Matchen) zur relativen Positionsbestimmung zweier Elemente zueinander ist allgemein bekannt, weshalb an dieser Stelle nicht weiter darauf eingegangen wird.

Diese Verfahren ermöglichen es, dass das dritte Kieferrelationselement und/oder der/die Inzisalstift(e) den Unterkieferzahnkronen bzw. Anteilen der Unterkieferzahnkronen nicht direkt an- oder aufliegen müssen. Das An- bzw. Aufliegen ist nur dann notwendig, wenn eine passive Fixierung des Unterkiefers in einer bestimmten Kieferrelation oder eine passive Führung einer Unterkieferbewegung über eine bestimmte Kieferrelationsbewegung hinweg erforderlich ist.

Bei der Wahl des Grenzbereichs ist zu beachten, dass beide Objekte, d.h., die Zahnkronen bzw. die Zahnkronenanteile und das Kieferrelationselement und/oder der Inzisalstift, von dem Scanner so erfasst werden, dass die Bestimmung der relativen Position der beiden Objekte zueinander möglich ist. Ist der Erfassungsbereich des Scanners bspw. groß und seine Auflösung hoch, kann der Grenzbereich entsprechend groß gewählt werden. Ist der Erfassungsbereich kleiner und die Auflösung niedriger, muss der Grenzbereich entsprechend kleiner gewählt werden.

Es hat sich als hilfreich erwiesen, wenn Markierungen, bspw. Positionsmarker, an der Vorrichtung derart angeordnet sind, dass der Aufwand der Scanvorgänge reduziert werden kann. Dennoch sind im Grenzbereich des Anlagerungselements, also zwischen Anlagerungselement und Zahnkronen und/oder Zahnkronenanteilen und/oder zwischen Anlagerungselement und Abdruckmaterial, immer noch Scans erforderlich.

Durch das erfindungsgemäße Verfahren unter Verwendung der erfindungsgemäßen Vorrichtung können die Scans im Grenzbereich weiter reduziert werden und deren Auswertungsgenauigkeit erhöht werden. Ferner ist das erfindungsgemäße Verfahren dahingehend effizienter, dass es nur noch zwei Registrierschritte benötigt, wodurch Zeit, Datenvolumen und/oder Rechenleistung reduziert werden. Ferner ermöglicht das erfindungsgemäße Verfahren eine Verbesserung der Genauigkeit der Kieferrelationsdatenbestimmung.

Vorteilhafte Aus- und Weiterbildungen, insbesondere der Vorrichtung, sind in den abhängigen Ansprüchen beschrieben und werden nachfolgend erläutert.

Eine vorteilhafte Ausführungsform sieht vor, dass das erste und/oder das zweite und/oder das dritte Kieferrelationselement entlang seiner Erstreckungsrichtung zumindest eine Markierung aufweist, die zur eindeutigen Erfassung von Positionen der Kieferrelationselemente zur Ermittlung von Kieferrelationspositionen von einer Erfassungseinrichtung, vorzugsweise einem Scanner, weiter vorzugsweise einem Intraoralscanner, erfassbar sind. Alternativ kann die Erfassungseinrichtung auch das menschliche Auge sein.

Dabei ist es von Vorteil wenn die Markierungen an Schnittpunkten der Kieferrelationselemente zur Erfassung ihrer relativen Position zueinander angeordnet sind. Diese Anordnung ermöglicht die Anwendung eines effizienten Verfahrens zur Erfassung von Kieferrelationsdaten.

Besonders geeignet sind Markierungen, die zur analogen und/oder zur digitalen Erfassung konfiguriert sind. Dadurch ist die Vorrichtung vielseitig und für verschiedene Verfahren einsetzbar.

Eine weitere Möglichkeit ist, dass das Oberkiefer-Anlageelement der Vorrichtung zumindest eine Markierung an oder im Grenzbereich zu Aussparungen zur digitalen, maschinellen Erfassung seiner relativen Position zu den Zahnkronen im Oberkiefer aufweist.

So kann die Vorrichtung ferner einen ersten Inzisalstift aufweisen, welcher sich relativ zum zweiten oder zum dritten Kieferrelationselement quer und caudal erstreckt und mit dem zweiten oder dritten Kieferrelationselement entlang dessen Erstreckungsrichtung verschieblich verbunden ist, wobei der erste Inzisalstift zur dorsalen oder ventralen Anlage an zumindest einer Unterkiefer-Zahnkrone konfiguriert ist. Dadurch kann der Fixierungsgrad, mit dem der Unterkiefer gegenüber dem Oberkiefer in einer bestimmten Kieferrelation positioniert werden soll, fixiert werden. Dabei kann der Inzisalstift insbesondere derart ausgebildet sein, dass sich seine Form der Form der Unterkiefer-Zahnkrone annähert. Dazu kann der Inzisalstift bspw. eine leicht gekrümmte, nach labial, also zu den Lippen hin, konvexe Form aufweisen. Ferner kann zur weiteren Erhöhung des Fixierungsgrads zwischen dem Inzisalstift und der Unterkiefer-Zahnkrone Abdruckmasse vorgesehen werden, welche eine Relativbewegung zwischen dem Inzisalstift und der Unterkiefer-Zahnkrone quasi unterbindet.

Des Weiteren kann die Vorrichtung ferner einen zweiten Inzisalstift aufweisen, welcher sich relativ zum zweiten oder zum dritten Kieferrelationselement quer und caudal erstreckt und mit dem zweiten oder dritten Kieferrelationselement entlang dessen Erstreckungsrichtung verschieblich verbunden ist, wobei der zweite Inzisalstift zur Anlage an oder beabstandet zu der zumindest einen Unterkiefer-Zahnkrone dem ersten Inzisalstift gegenüberliegend angeordnet ist. Auch dieser Inzisalstift kann derart ausgebildet sein, dass sich seine Form der Form der Unterkiefer-Zahnkrone annähert.

Wenn lediglich ein Inzisalstift vorgesehen ist, kann dieser entweder labial oder lingual an der Unterkiefer-Zahnkrone anliegen. Sind zwei Inzisalstifte vorgesehen, sind diese in der Regel so angeordnet, dass einer labial und einer lingual an derselben Unterkiefer-Zahnkrone anliegt. Dabei ist es möglich, dass lediglich einer der beiden Inzisalstifte bezüglich des dritten Kieferrelationselements verschieblich angeordnet ist, während der andere der beiden Inzisalstifte in einer vorbestimmten Position an dem dritten Kieferrelationselement festgelegt ist.

Weiter ist es denkbar, dass statt zwei separaten Inzisalstiften ein einzelner Inzisalstift vorgesehen ist, welcher u-förmig mit der Öffnung zu der Unterkiefer-Zahnkrone hinweisend, ausgebildet ist, und so ein erster Schenkel labial und ein dem ersten Schenkel gegenüberliegender zweiter Schenkel lingual der Unterkiefer-Zahnkrone angeordnet ist. auch hierbei ist es denkbar, dass der Inzisalstift mit Abdruckmasse vermittelt an der Unterkiefer-Zahnkrone anliegt, um die (unerwünschte) Relativbewegung zwischen dem Inzisalstift und der Unterkiefer-Zahnkrone zu reduzieren.

Für die digitale Registrierung ist es von Vorteil, wenn der erste Inzisalstift und/oder der zweite Inzisalstift entlang seiner Erstreckungsrichtung jeweils zumindest eine Markierung (200) aufweist, die zur eindeutigen Erfassung von Positionen der Inzisalstifte zur Ermittlung von Kieferrelationspositionen von einer Erfassungseinrichtung, vorzugsweise einem Scanner, weiter vorzugsweise einem Intraoralscanner, erfassbar sind. Alternativ kann die Erfassungseinrichtung auch das menschliche Auge sein.

Dabei ist es von Vorteil wenn die Markierungen an Schnittpunkten der Inzsalstifte und/oder an Schnittpunkten zwischen einem Inzisalstift und/oder beiden Inzisalstiften und dem zweiten Kieferrelationselement oder dem dritten Kieferrelationselement zur Erfassung ihrer relativen Position zueinander angeordnet sind. Diese Anordnung ermöglicht die Anwendung eines effizienten Verfahrens zur Erfassung von Kieferrelationsdaten.

Besonders geeignet sind Markierungen, die zur analogen und/oder zur digitalen Erfassung konfiguriert sind. Dadurch ist die Vorrichtung vielseitig und für verschiedene Verfahren einsetzbar.

In einer möglichen Ausführungsform der Vorrichtung kann mindestens ein Kieferrelationselement einen dorsalen Abschnitt und einen ventralen Abschnitt aufweisen, die über eine Gelenkverbindung miteinander verbunden sind. Diese ermöglichen freie, entsprechend der freien Wahl des Probanden, Laterotrusionsbewegungen des Unterkiefers oder vorbestimmte, entsprechend dem gewünschten Ziel geführte Laterotrusionsbewegungen, ohne dass es zu der unerwünschten Relativbewegung zwischen der Unterkiefer-Zahnkrone und dem dritten Kieferrelationselement bzw. dem/den Inzisalstift/en kommt.

Hierzu kann die Gelenkverbindung derart eingerichtet sein, dass der distale Abschnitt des mindestens einen Kieferrelationselements in wenigstens drei Freiheitsgraden, insbesondere in die drei translatorischen Bewegungsrichtungen "oben-unten", "vorne-hinten" und "rechts-links", bewegbar ist. Die drei Freiheitsgrade ermöglichen, dass der distale Abschnitt in der dorsal-ventral-Richtung (anterior-posterior-Richtung, "vorne-hinten"), in der caudal-cranial-Richtung (Öffnungs- bzw. Schließrichtung, "oben-unten") und in der lateralen Richtung ("rechts-links"-Richtung), sowie in Mischrichtungen, d.h., in Richtungen, die aus einer Überlagerung von wenigstens zwei der genannten Richtung hervorgehen, bewegbar ist. Dies kann z.B. mittels einer Kugelgelenkverbindung oder einer Scharniergelenkverbindung umgesetzt werden.

Eine denkbare Weiterbildung der Vorrichtung kann vorsehen, dass sich der dorsale Anteil des dritten Kieferrelationselements entlang der Unterkiefer-Zahnkronen weiter nach dorsal und lateral ausprägt und den Okklusalflächen der Unterkiefer-Zahnkronen an- und/oder auf- und/oder nahe bei liegt und/oder ganz oder teilweise umfasst und/oder durch Abdruckmaterial den Okklusalflächen vollständig oder teilweise aufliegt und/oder mit diesen reversibel verbunden ist. Ein solches drittes Kieferrelationselement liegt mehreren Zahnkronen auf und hat somit eine stabilere Position, d.h., es kann sich durch Bewegung des Unterkiefers nicht so leicht verschieben. Ferner ermöglicht eine solche Ausbildung, insbesondere unter Verwendung von Abdruckmasse, bei der Erfassung der Kieferrelationsdaten einen Abdruck des Unterkiefers zu erzeugen, mittels dessen die spezifischen dreidimensionalen Oberflächendaten ermittelt werden können. Bei der maschinellen Erfassung durch bspw. einen Intraoralscanner, wird durch diese Ausprägung des dritten Kieferrelationselements die Genauigkeit der Registrierung erhöht. So kann bei einer Abstützung des dritten Kieferrelationselements im Inzisalbereich nur ein Scan zwischen dem dritten Kieferrelationselement und den Schneidezähnen des Unterkiefers erfolgen, wohingegen mit dem erweiterten dritten Kieferrelationselement an dem Unterkieferzahnbogen beidseits im Seitenzahnbereich ein Scan zwischen diesen Zahnkronen und des erweiterten dritten Kieferrelationselements erfolgen kann.

Die Vorrichtung weist ein als eine zahnbogenförmige Oberkiefer-Bissgabel ausgebildetes Oberkiefer-Anlageelement auf, welche zumindest an den offenen Endabschnitten Aufnahmebereiche besitzt, die zur reversiblen, arbeitsstabilen Aufnahme, insbesondere unter Zuhilfenahme von Abdruckmasse, von Oberkiefer-Zahnkronen konfiguriert sind, und im Bereich des Bogenscheitelpunkts mit dem ersten Kieferrelationselement fest verbunden ist. Unter fest ist hierbei eine wieder lösbare (reversible) oder eine nicht-lösbare (irreversible) Verbindung zu verstehen.

Die Oberkiefer-Bissgabel liegt, vermittelt mit Abdruckmasse, den Oberkieferzähnen oder den Oberkieferzähnen und dem angrenzenden Zahnfleisch des Alveolarfortsatzes teilweise auf und/oder an und/oder nahe bei.

In einer möglichen Ausführungsform können die Aufnahmebereiche der Oberkiefer-Bissgabel einen Bereich der Frontzahnkronen, insbesondere der Schneidezahnkronen, aussparen. Bei weiteren möglichen Ausführungsformen können die Aufnahmebereiche der Oberkiefer-Bissgabel ferner andere oder weitere zu den Frontzahnkronen distal angeordnete Zahnkronen und/oder Zahnkronenanteile aussparen. Das bedeutet, dass die Aussparungen auch, ausschließlich oder zusätzlich, an anderen bzw. weiteren Zahnkronen oder Zahnkronenanteilen als an den Frontzahnkronen vorgenommen werden und die Aussparungen soweit fortgeführt werden bis schließlich nur noch die (Teil-) Zirkumferenzen aller oder eines Teils der Zahnkronen des Zahnbogens mit angrenzendem Zahnfleisch umfasst werden.

Im Unterschied zu bekannten Paraokklusalbissgabeln, die dem Zahnbogen an seiner Außenseite der Zahnkronen und den Zwischenzahnkronenbereichen, also dem Interdentalbereich, an ihrer größten Zirkumferenz unter Klemmpassung anliegt, liegt die erfindungsgemäße Oberkiefer-Bissgabel durch Abdruckmaterial vermittelt ganz oder zumindest teilweise den Zahnkronen und dem angrenzenden Zahnfleisch des Alveolarfortsatzes auf und/oder an und/oder nahe bei.

Insbesondere kann die Oberkiefer-Bissgabel in den üblichen in der Zahnmedizin bekannten Zahnbogengrößen vorhandenen Bissgabelgrößen konfektioniert eingesetzt werden. Dadurch kann die Oberkiefer-Bissgabel bereits während des ersten Termins am Probanden vermittelt mit Abdruckmaterial am Oberkiefer fixiert werden, wohingegen die bekannten, individuellen, nicht konfektionierten, labortechnisch zu fertigenden Paraokklusalbissgabeln nach Abdrucknahme der Oberkieferzähne, bei einem ersten Termin des Probanden, labortechnisch hergestellt werden und können erst in einer zweiten Sitzung am Oberkiefer fixiert werden. Ferner können durch die Oberkiefer-Bissgabel die dreidimensionalen Oberflächen bekannt sein und müssen nicht bei jeder Anwendung erneut erhoben werden.

Die Aussparungen eines Teils oder aller Oberkiefer-Frontzahnkronen und ggf. auch -Eckzahnkronen können dem Untersucher unter Orientierung an den von der Bissgabel und dem Abdruckmaterial freibleibenden Inzisalkanten und den hieran angrenzenden Oberkiefer-Frontzahnanteilen und ggf. -Eckzahnanteilen die Positionierung des Unterkiefers, d.h., die Justierung des Unterkiefers zum Oberkiefer in einer bestimmten Relation zueinander erleichtern, was insbesondere für das passive Verfahren von Vorteil ist. Bei der Registrierung der Kieferrelation mittels eines optischen oder Ultraschall- Scans, bspw. durch einen handelsüblichen optischen Intraoralscanner, kann aufgrund der Aussparungen die Positionierung der Oberkiefer-Bissgabel relativ zu den Oberkieferzähnen anhand der freiliegenden Zahnkronenanteile über den optischen Scan erfolgen. Hierbei wird die scanoptische Erfassung durch die Aussparungen im Frontzahnbereich- und hintersten Seitenzahnbereich dadurch erhöht, dass der Winkelbezug zwischen der Bissgabel einerseits und dem Zahnbogen andererseits durch die maximal voneinander entfernten Messstellen präziser wird.

Ferner ist insbesondere das Aussparen der längsten Kronen im Zahnbogen, nämlich der Frontzahn- und ggf. auch der Eckzahnkronen von Vorteil, da somit der Biss geringer gesperrt wird, d.h., der Abstand zwischen den Oberkiefer-Zahnkronen und den Unterkiefer-Zahnkronen kann geringer sein, als dies ohne Aussparung dieser Zähne der Fall ist. Die Frontzahnkronen können auch als Schneidezahnkronen bezeichnet werden. Dies ermöglicht eine Positionierung des Unterkiefers mit einem geringeren okklusalen Abstand von Oberkiefer- zu Unterkieferzähnen, was auch als Interokklusalabstand oder Bisssperrung bezeichnet werden kann, als dies bei der vollständigen Einfassung dieser Zahnkronen, wie es bspw. bei Abdrucklöffeln der Fall ist, möglich ist. Dies basiert darauf, dass die Frontzähne und ggf. die Eckzähne mit ihren Inzisalkanten grundsätzlich über die Okklusionsebene der übrigen Zähne hinausragen. Die geringere Bisssperrung ermöglicht die Verwendung der Vorrichtung zur aktiven und passiven, statischen und dynamischen Kieferrelationsregistrierung bzw. zur Relationsregistrierung der Zahnkronen beider Kiefer zueinander zur Herstellung von Schienen oder Aufbissbehelfen, die, eingesetzt im Mund des Probanden, eine größere oder gleiche Bisssperrung aufweisen als die Vorrichtung. Dies rührt daher, dass Schienen und Aufbissbehelfe mindestens allen Zahnkronen eines Kiefers, bei Unterkieferprotrusionsschienen (UPS) auch mindestens allen Unterkiefer-Zahnkronen und zusätzlich teilweise allen Oberkiefer-Zahnkronen aufliegen, wobei die Bisssperrung größer oder gleich ist als die bei eingesetzter Oberkiefer-Bissgabel der erfindungsgemäßen Vorrichtung. Die Differenz bzw. Gleichheit dieser beiden Bisssperrungen ermöglicht es, ein Kieferrelationselement zwischen die beiden Inzisalkanten von Oberkiefer- und Unterkiefer-Schneidezähnen so zu positionieren, dass dieses den Inzisalkanten der Unterkiefer-Schneidezahnkronen aufliegen kann. Schienen, Aufbissbehelfe und/oder Unterkieferprotrusionsschienen werden nachfolgend als Hilfsmittel bezeichnet.

Die Positionierung der Kieferrelation gelingt, indem das dritte Kieferrelationselement mit der Oberkiefer-Bissgabel, durch Abdruckmaterial vermittelt den Oberkiefer-Zahnkronen und/oder den Oberkiefer-Zahnkronen und angrenzendem Zahnfleisch aufliegend, über weitere Elemente, insbesondere das erste und das zweite Kieferrelationselement, verbunden wird, und die digitale Registrierung der Kieferrelation gelingt, indem die Positionen der Oberkiefer-Bissgabel zu den Oberkiefer-Zahnkronen, allen weiteren Anteile der Vorrichtung zueinander (also auch zur Oberkiefer-Bissgabel) und zu den Inzisalkanten oder weitere Teilbereiche der Unterkiefer-Zahnkronen scantechnisch, bspw. durch einen optischen Intraoralscanner erfasst und den CAD/CAM-Programmen zur Herstellung der Hilfsmittel zugeführt werden.

Hierbei kann eine mögliche Ausführungsform der Vorrichtung vorsehen, dass die Oberkiefer-Bissgabel und das erste Kieferrelationselement integral bzw. einstückig ausgebildet sind.

Bei der Vorrichtung können die Aufnahmebereiche auf der im eingesetzten Zustand den Oberkiefer-Zahnkronen zugewandten Seite jeweils eine Vertiefung bzw. Ausnehmung aufweisen. Diese können die Aufnahme des Abdruckmittels verbessern, was die Abdrucknahme für den Probanden angenehmer gestaltet.

Ferner können die Aufnahmebereiche an ihrer Umfangsfläche mehrere kleine Durchgangslöcher aufweisen. Diese kleinen Durchgangslöcher können auch als Perforationen bezeichnet werden und der besseren Retention, d.h. der besseren reversiblen, mechanischen Verbindung, des Abdruckmaterials an der Oberkiefer-Bissgabel dienen.

Wahlweise ist neben dem statischen bzw. dynamischen, digitalen Verfahren auch das statische analoge Verfahren mittels Abdruckmaterial und der analogen Herstellung im zahntechnischen Labor, oder eine Kombination beider - dem analogen und dem digitalen - Verfahren mit der erfindungsgemäßen Vorrichtung möglich.

Die Erfindung wird nachfolgend anhand von Zeichnungen näher beschrieben. Die Zeichnungen sind lediglich beispielhaft zu verstehen. Sie sind schematisch, nicht maßstabsgetreu und zeigen jeweils nur die zum Verständnis der vorliegenden Erfindung wesentlichen Merkmale. Es versteht sich, dass weitere Merkmale, wie sie einem Fachmann geläufig sind, vorliegen können. In den Zeichnungen bezeichnen gleich Bezugsziffern jeweils gleich oder entsprechende Elemente. Es zeigen:
Fig. 1 eine Seitenansicht eines menschlichen Schädels mit einem Unterkiefer in habitueller Unterkieferöffnungsposition und mit einer erfindungsgemäßen Vorrichtung in einer ersten beispielhaften Ausführungsform;
Fig. 2 eine Frontansicht zu Fig. 1;
Fig. 3 eine Seitenansicht des menschlichen Schädels mit dem Unterkiefer in habitueller Unterkieferöffnungsposition und mit der erfindungsgemäßen Vorrichtung in einer zweiten beispielhaften Ausführungsform;
Fig. 4 die Seitenansicht gemäß Fig. 3, mit dem Unterkiefer in Unterkieferprotrusion;
Fig. 5 eine Seitenansicht des menschlichen Schädels mit dem Unterkiefer in habitueller Unterkieferöffnungsposition und mit eingezeichneter sagittaler, habitueller Unterkieferöffnungsbahn und eingezeichnetem Grenzbewegungsbereich für einen Inzisalpunkt in der Sagittalebene;
Fig. 6 eine Frontansicht zu Fig. 5, mit den eingezeichneten Grenzbewegungen für den Inzisalpunkt in frontaler Aufsicht;
Fig. 7A eine Fixierung eines ventral (anterior) der Unterkieferzahnkronen gelegenen Inzisalstifts an einem Kieferrelationselement, welches mit einem weiteren Kieferrelationselement verbunden ist, in einer Seitenansicht;
Fig. 7B eine Fixierung eines dorsal (posterior) der Unterkieferzahnkronen gelegenen Inzisalstifts an einem Kieferrelationselement, welches mit einem weiteren Kieferrelationselement verbunden ist, in einer Seitenansicht;
Fig. 7C eine Fixierung des ventral der Unterkieferzahnkronen gelegenen Inzisalstifts an dem einen Kieferrelationselement, welches eine Okklusalauflage aufweist, und mit einer gelenkigen Verbindung zwischen dem Inzisalstift und dem einen Kieferrelationselement und einer gelenkigen Verbindung innerhalb des einen Kieferrelationselements;
Fig. 7D eine Draufsicht zu Fig. 7C mit zusätzlichem Unterkieferzahnbogen;
Fig. 7E und 7F Draufsichten zu Fig. 7C, wobei das eine Kieferrelationselement und der Inzisalstift mit ihren gelenkigen Verbindungen für die Führung des Inzisalpunkts aus der habituellen Unterkieferöffnungsposition in eine Laterotrusionsposition nach rechts eingestellt sind, ohne dass es zu einer Retrusion des Zahnbogens kommt;
Fig. 8 eine Draufsicht auf die Oberkiefer-Bissgabel mit integral ausgebildetem ersten Kieferrelationselement;
Fig. 9A eine Explosionsdarstellung der erfindungsgemäßen Vorrichtung in der ersten Ausführungsform mit der Oberkiefer-Bissgabel;
Fig. 9B eine Explosionsdarstellung einer möglichen Ausführungsform der erfindungsgemäßen Vorrichtung mit einem alternativ ausgebildeten Oberkiefer-Bissgabelanteil;
Fig. 10 eine Darstellung eines Oberkiefer-Zahnbogens und eines UnterkieferZahnbogens zur Veranschaulichung des Zahnschemas;
Fig. 11 eine Darstellung eines ersten Registrierschritts eines erfindungsgemäßen Verfahrens; und
Fig. 12 eine Darstellung eines zweiten Registrierschritts des erfindungsgemäßen Verfahrens.

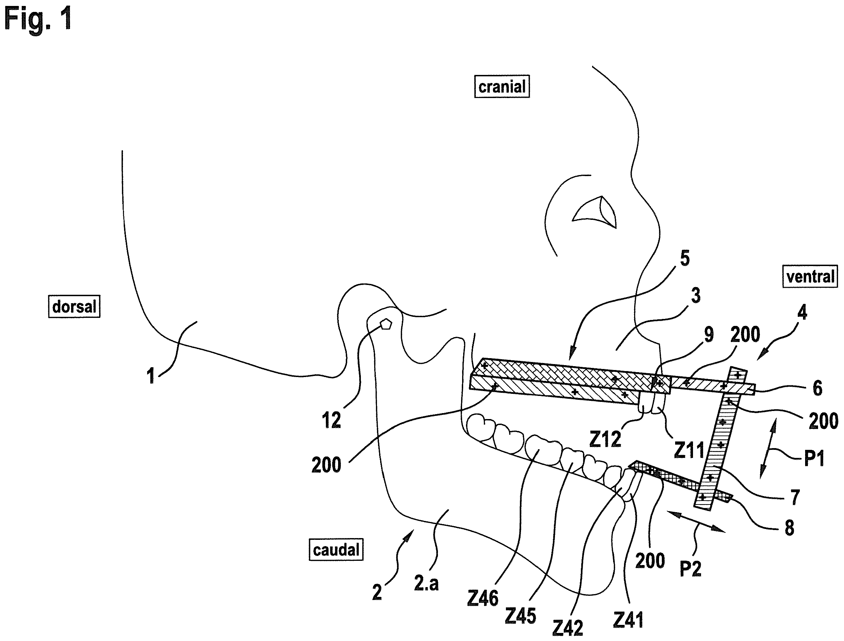

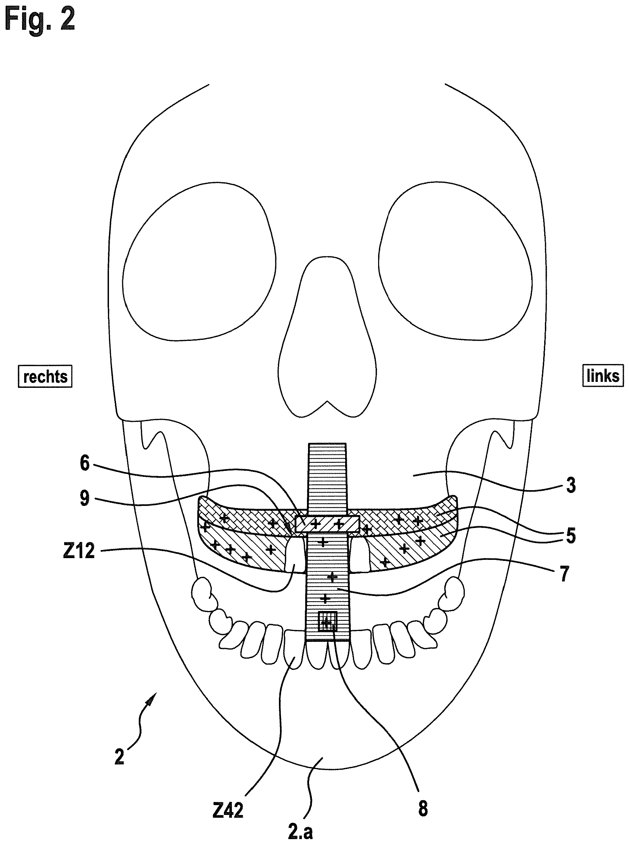

Fig. 1 und Fig. 2 zeigen eine Seitenansicht bzw. eine Frontansicht eines menschlichen Schädels 1 mit einem Unterkiefer 2 in einer relativ zu einem Oberkiefer 3 vorbestimmten habituellen Unterkieferöffnungsposition 2.a, wobei an dem Oberkiefer 3 eine Vorrichtung 4 zur Registrierung von Kieferrelationsdaten in einer ersten beispielhaften Ausführungsform angeordnet ist. Die Vorrichtung 4 ist an einer Oberkiefer-Bissgabel 5 angeordnet, welche eine beispielhafte Ausführungsform für ein Oberkiefer-Anlageelement ist, und weist ein nach vorne hin ausgeprägtes, also sich nach ventral erstreckendes, erstes Kieferrelationselement 6, ein von dem ersten Kieferrelationselement 6 aus nach unten ausgeprägtes, also sich nach caudal erstreckendes, zweites Kieferrelationselement 7 und ein von dem zweiten Kieferrelationselement 7 nach hinten ausgeprägtes, also sich nach dorsal erstreckendes, drittes Kieferrelationselement 8 auf.

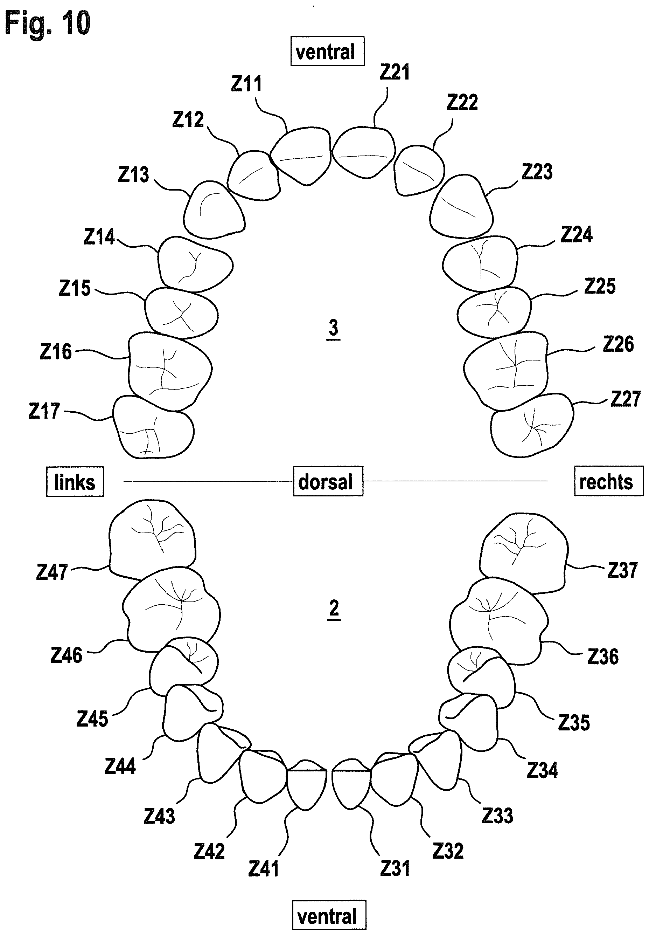

Die Vorrichtung 4 bietet zusammen mit der Oberkiefer-Bissgabel 5 eine statische Unterkieferöffnungsposition in der beispielhaft gewählten habituellen Unterkieferöffnungsposition 2.a, d.h., eine Abstützung des Unterkiefers 2 gegenüber dem Oberkiefer 3 (passives Verfahren) als Hilfe für den menschlichen Probanden für das Halten dieser Unterkieferöffnungsposition 2.a. Dies ist dadurch möglich, dass die einzelnen Elemente der von der Oberkiefer-Bissgabel 5 nach vorne hin ausgeprägten Vorrichtung 4 zueinander beweglich verstellbar und arretierbar sind. In der hier gezeigten beispielhaften Ausführungsform ist das zweite Kieferrelationselement 7 in seiner Erstreckungsrichtung verschieblich mit dem ersten Kieferrelationselement 6 verbunden (siehe Pfeil P1) und quer zu dem ersten Kieferrelationselement 6 angeordnet, und das dritte Kieferrelationselement 8 ist in seiner Erstreckungsrichtung verschieblich mit dem zweiten Kieferrelationselement 7 verbunden (siehe Pfeil P2) und quer zu dem zweiten Kieferrelationselement 7 angeordnet. Ferner liegt das dritte Kieferrelationselement 8 auf der Inzisalkante, also der Schneidekante, eines oder mehrerer der ersten unteren Schneidezähne Z32 bis Z42 (siehe Fig. 10) auf.

Durch eine Aussparung 9 im Bereich der oberen Schneidezähne Z12 bis Z21, oder im Bereich der oberen Schneide- und Eckzähne Z13 bis Z23, kann eine durch die Oberkiefer-Bissgabel 5 bedingte Bisssperrung, wie eingangs beschrieben, reduziert werden. Würden die Zähne Z12 bis Z21 bzw. Z13 bis Z23, die am längsten ausgeprägt sind, von der Oberkiefer-Bissgabel 5 mit eingefasst werden, so würde eine größere Bisssperrung auftreten und die Variationen der einstellbaren Kieferrelationen mit der Vorrichtung reduzieren.

Daher eignet sich die Verwendung dieser Vorrichtung besonders bei der Registrierung einer bestimmten aktiven Unterkieferprotrusion zur Herstellung von Unterkieferprotrusionsschienen (UPS) zur Behandlung des Schnarchens oder nächtlicher obstruktiver Atmungsstörungen. Bei den UPS handelt es sich um Schienensysteme, die den Ober- und Unterkieferzahnkronen anliegen und hierdurch auch bei Aussparung der Frontzahnkronen bzw. der Front- und Eckzahnkronen eine gleich oder größere Bisssperrung auslösen als diese bei der eingesetzten Vorrichtung 4 mit der Oberkiefer-Bissgabel 5 der Fall wäre. Die Vorrichtung 4 in Kombination mit der Oberkiefer-Bissgabel 5 kann nachfolgend auch als Einrichtung 45 bezeichnet werden. Diese Bisssperrungsdifferenz, die sich bei einer eingesetzten UPS im Vergleich zur eingesetzten Einrichtung 5 ergibt, lässt mindestens einen derartigen Spalt zwischen den Oberkiefer- und Unterkieferinzisalkanten für die Vorrichtung 4 frei, durch den das dritte Kieferrelationselement 8 auf den Inzisalkanten der Unterkieferschneidzähne Z32 bis Z42 aufliegen und den Unterkiefer 2 positionieren kann.

Ebenso eignet sich die Verwendung dieser Vorrichtung für die Herstellung von Schienen, die dem Ober- oder Unterkiefer in allen Kronenbereichen, also auch allen Frontzahnkronen des entsprechenden Kiefers, aufliegen. Solche Schienen finden beispielsweise in der Therapie der Kiefergelenke, der Kiefermuskulatur, der Zahnfehlstellungen und von Kieferbrüchen Anwendung.

An den Oberflächen der Oberkiefer-Bissgabel 5 und der Vorrichtung 4 angebrachte Markierungen 200, bspw. optische Marker, (in Fig. 1 als Kreuze dargestellt) dienen dabei der Präzisierung für Scanverfahren, bspw. mittels optischer Introralscanner, und/oder als ein als Sender/Empfängersystem 200 ausgebildetes elektronisches Messsystem zur messtechnischen Bestimmung der Kieferrelation, die später noch Betrachtung finden.

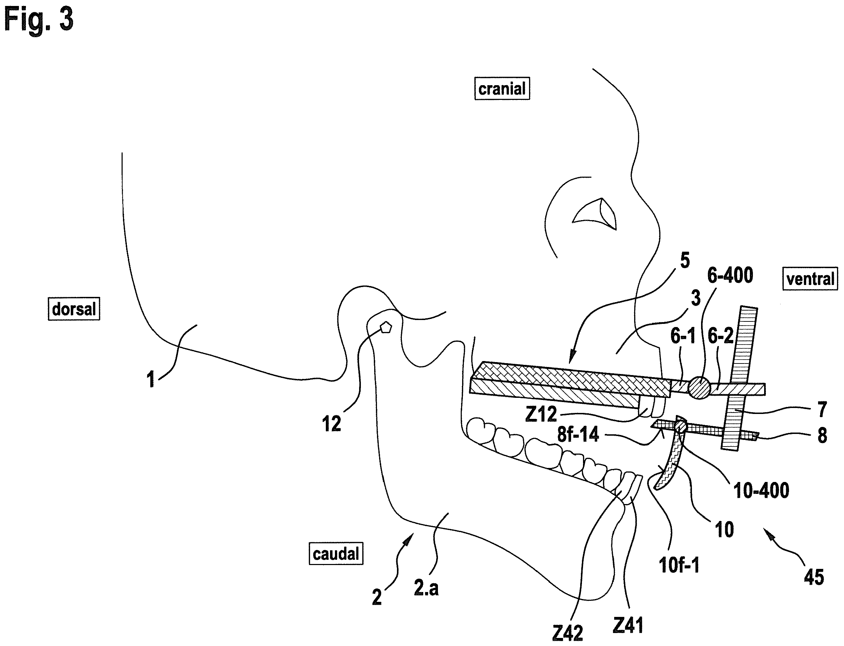

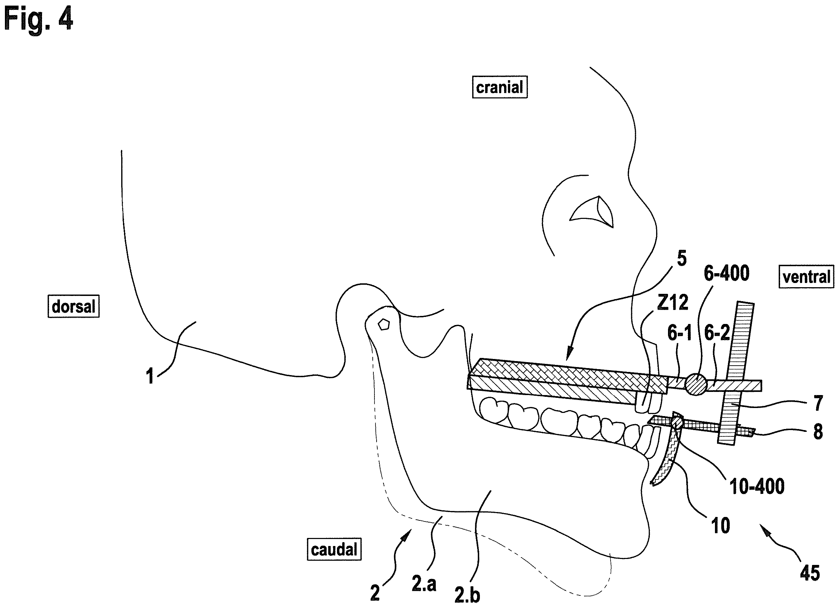

Die Fig. 3 und 4 zeigen eine zweite beispielhafte Ausführungsform der Vorrichtung 4, welche sich besonders für das dynamische Verfahren der Kieferrelationsregistrierung eignet, wobei Fig. 3 den Unterkiefer 2 in der habituellen Unterkieferöffnungsposition 2.a zeigt und Fig. 4 den Unterkiefer 2 in einer möglichen beispielhaften Unterkieferprotrusion 2.b zeigt, z. B., eine (vorbestimmte) Kieferrelation zur Behandlung nächtlicher Atmungsaussetzer und/oder des Schnarchens, oder eine (vorbestimmte) Kieferrelation zur Behandlung von Kiefergelenkserkrankungen.

Bei dynamischen Kieferrelationsregistrierungen größeren Ausmaßes, bei denen es zu einer Überschreitung des Erfassungsbereichs von, z. B. optischen, Intraoralscannern von Vorrichtungsanteilen, insbesondere das dritte Kieferrelationselement 8, und Unterkieferzahnkronenanteilen kommt und eine Kieferrelationsbestimmung unmöglich machen, ist zur Überbrückung dieser Überschreitung des Erfassungsbereichs des Intraoralscanners ein erster Inzisalstift 10 als caudale Verlängerung des dritten Kieferrelationselements 8 ventral der Unterkieferzahnkronen gelegen, hilfreich, sodass über die gesamte Unterkieferschließbewegung von z.B., der habituellen Unterkieferöffnungsposition 2.a (siehe Fig. 3) in z.B., die gewünschte Unterkieferprotrusion 2.b (siehe Fig. 4) sowie in umgekehrter Bewegungsrichtung des Unterkiefers 2 der Inzisalstift 10 und die angrenzenden Anteile der Unterkieferzahnkronen Z42 und Z41 im Erfassungsbereich des Intraoralscanners zum Zwecke der Registrierung verbleiben.

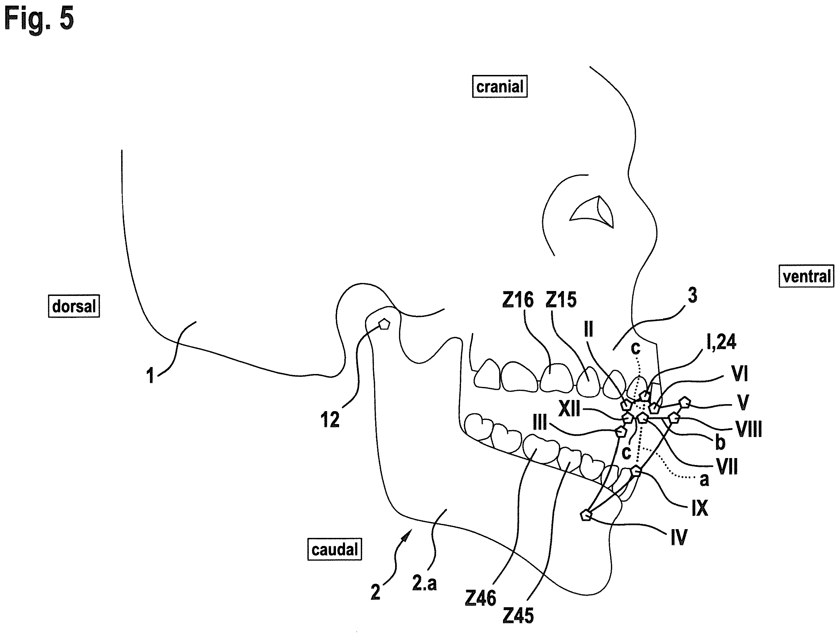

Hierbei ist es vorteilhaft, wenn der Inzisalstift 10 konfektioniert hergestellt in mehreren für die Unterkieferbewegung mittelwertig typischen Ausführungsformen bereitgestellt wird. In der hier gezeigten Ausführungsform ist das erste Kieferrelationselement 6 mittels einer kugelgelenkigen Verbindung 6-400 in einen dorsalen Bereich 6-1 und einen ventralen Bereich 6-2 unterteilt, was für die Ausrichtung der Vorrichtung 4 hilfreich ist und aus Fig. 5 ersichtlich wird.

Fig. 5 zeigt dargestellt im Schädel 1 das Bewegungsspektrum des Unterkiefers 2 gegenüber dem Oberkiefer 3 für einen Inzisalpunkt 24 in der Sagittalebene. Die Bewegung des Inzisalpunkts 24, und damit die der Frontzahnkronen des Unterkiefers 2, ist innerhalb der mit geraden Verbindungsstrecken I bis VI markierten sagittalen Fläche möglich.

Abweichend hiervon ist bei eingesetzten Einfachschienen (im Weiteren Schienen genannt) oder Doppelschienensystemen (bspw. UPS), bedingt durch die eingangs beschriebene Bisssperrung, das Bewegungsspektrum des Inzisalpunkts 24 nur innerhalb der mit geraden Verbindungsstrecken zwischen den Punkten XII, III, IV, IX, VIII, VII, XII markierte sagittale Fläche möglich, wohingegen das Bewegungsspektrum zwischen den Punkten XII, II, I, VI, V, VIII, VII, XII durch die Bisssperrung blockiert ist. Das dritte Kieferrelationselement 8 findet somit in dem Zwischenraum zwischen b (Strecke zwischen den Punkten VII und VIII, gewünschte bzw. gewählte Protrusionsebene) und/oder c (Strecke zwischen XII und VII) und dem Punkt VI (Inzisalkante der oberen mittleren Schneidezahnkronen) bei eingesetzter Einrichtung 45 Platz, da die Einrichtung 45 den Biss gleich oder geringer sperrt als die Schienen oder Doppelschienensysteme.

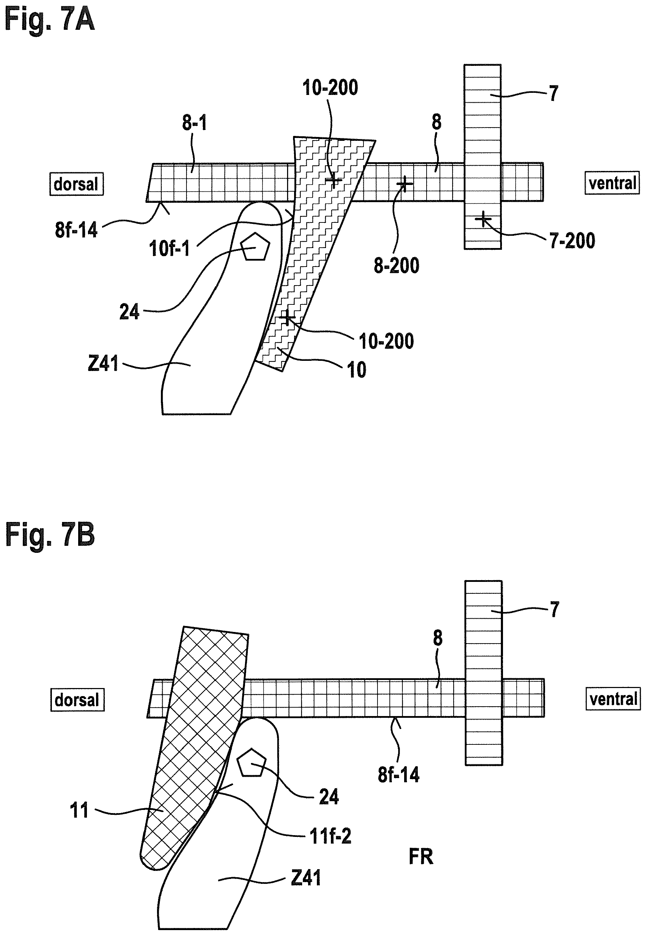

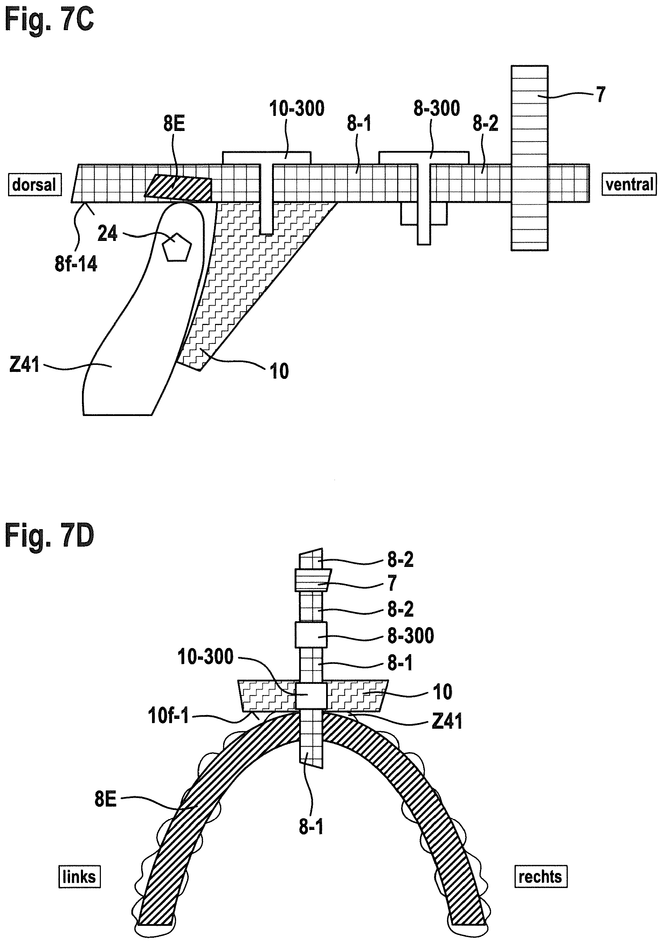

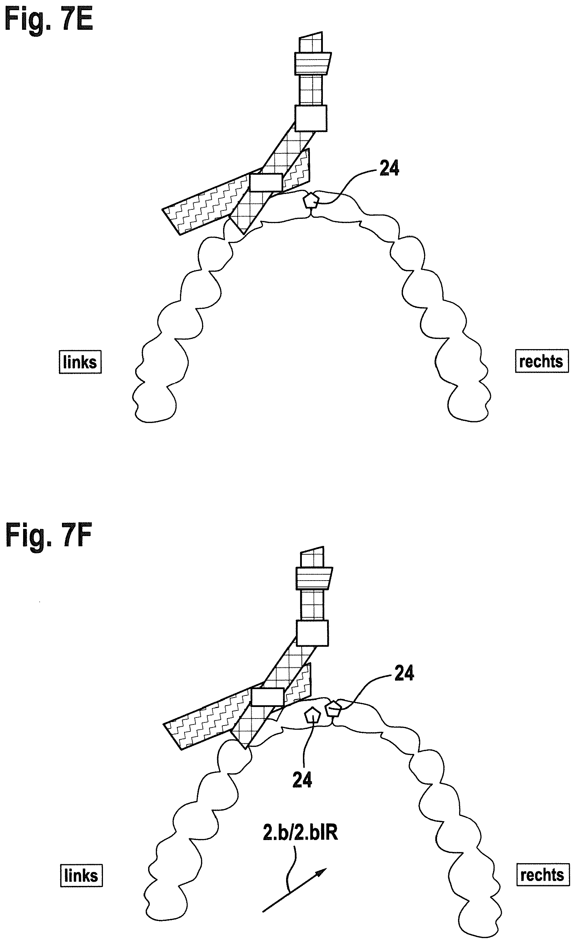

Die Ausrichtung der dorsalen Fläche 10f-1 (siehe Fig. 7) des Inzisalstifts 10 mittels einer als Kugelgelenk ausgebildeten gelenkigen Verbindung 10-400 (siehe Fig. 3 und Fig. 4) und/oder die individuelle Herstellung und/oder die konfektionierte Herstellung der dorsalen Fläche 10f-1 des Inzisalstifts 10 orientiert sich dabei an dem Verlauf des Inzisalpunkts 24 von z.B. der habituellen Unterkieferöffnungsposition IX in z.B. die gewählte Unterkieferprotrusionsposition in einen Punkt auf der Strecke b oder c, was bei der Herstellung von UPS von besonderem Vorteil ist, sodass der Inzisalstift 10 zusammen mit den Frontzahnkronenanteilen des Unterkiefers während dieser Unterkieferbewegung ständig im Erfassungsbereich des Intraoralscanners bleiben. Die Ausrichtung des dritten Kieferrelationselements 8 in der Horizontalen richtet sich z.B. nach dem Verlauf der zweckdienlichen Protrusionsebene b, sodass für unterschiedliche Unterkieferprotrusionspositionen eine unveränderte Bisssperrung zwischen b und VI erzielt werden kann, was bei der Herstellung von UPS von besonderem Vorteil ist.

Derartige Vorgaben der Ausrichtung richten sich immer nach dem Zweck, welche die zahnärztlichen Hilfsmittel erzielen sollen.

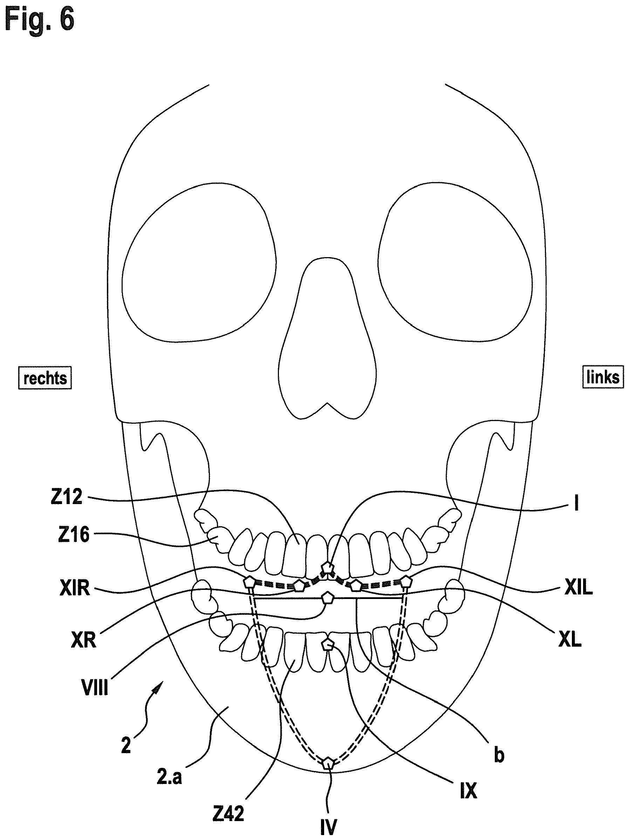

Fig. 6 zeigt in der Frontalansicht gemäß Fig. 2 die Inzisalpositionen I (Schlussbiss), IX (maximale habituelle Mundöffnung) und IV (maximal mögliche, aktive Mundöffnung) für den Inzisalpunkt 24. Bei der in Fig. 6 dargestellten lateralen Grenzbewegungen, auch Laterotrusionsbewegungen genannt, wird der Unterkiefer 2 von Position I über die Frontzähne des Oberkiefers 3 nach rechts in die Position XR und nach links in die Position XL geführt, und von hier über die Eckzähne nach links in die Position XIL und nach rechts in die Position XIR geführt und gelangt von hier aus beidseits nach maximaler Unterkieferöffnung in die mittige Position IV, der maximal möglichen, aktiven Mundöffnung (maximale, aktive Unterkieferöffnungsposition). Die gestrichelte Linie zeigt das aus frontaler Ansicht erkennbare Bewegungsspektrum des Inzisalpunktes 24 des Unterkiefers 2.

Abweichend hiervon ist bei eingesetzten Schienen oder Doppelschienensystemen (bspw. UPS), bedingt durch die eingangs beschriebene Bisssperrung, das Bewegungsspektrum des Inzisalpunktes 24 in diesem Bewegungsspektrum zwischen der geraden Verbindungsstrecke b und dem oberen Anteil des durch gestrichelte Linie dargestellten Bewegungsspektrums blockiert. Das dritte Kieferrelationselement 8 (siehe auch Fig. 1 bis 4) findet in dem durch dieses blockierte Bewegungsspektrum bedingten Zwischenraum Platz, sodass statische und dynamische Kieferrelationsregistrierungen für derartige zahnärztliche Hilfsmittel gelingen kann.

Folglich können mit der Vorrichtung 4, insbesondere in Kombination mit der Oberkiefer-Bissgabel 5, alle statischen und dynamischen Kieferrelationsregistrierungen in dem übrigen Anteil des Bewegungsspektrums, unterhalb der geraden Strecke b, vorgenommen werden.

Fig. 7A zeigt das dritte Kieferrelationselement 8 mit dem Inzisalstift 10, jedoch verkürzt dargestellt, wobei die ventrale Zahnkronenfläche des Zahns Z41 dem Inzisalstift 10 an seiner dorsalen Fläche 10f-1 anliegt und das dritte Kieferrelationselement 8 in seinem distalen Anteil 8-1 mit seiner unterseitigen Fläche 8f-14 auf der Inzisalkante aufliegt, und Fig. 7B zeigt das dritte Kieferrelationselement 8 mit einem zweiten Inzisalstift 11, wobei die dorsale Zahnkronenfläche des Zahns Z41 dem Inzisalstift 11 an seiner ventralen Fläche 11f-2 anliegt und das dritte Kieferrelationselement 8 mit seiner unterseitigen Fläche 8f-14 auf der Inzisalkante aufliegt. Durch die Verwendung von mindestens einem Inzisalstift 10, 11 erhöht sich der Fixierungsgrad, mit dem der Unterkiefer 2 gegenüber dem Oberkiefer 3 in einer bestimmten Kieferrelation positioniert werden soll, gegenüber dem Fixierungsgrad, welcher durch das dritte Kieferrelationselement 8 allein möglich wäre.

Dieser Fixierungsgrad kann darüber hinaus dadurch erhöht werden, indem die Inzisalstifte 10, 11 zusammen an dem dritten Kieferrelationselement 8 positioniert werden, sodass die Zahnkrone (hier: der Zahn Z41) sowohl mit ihrer ventralen als auch mit ihrer dorsalen Kronenfläche und zusammen mit ihrer Inzisalkante zwischen den Inzisalstiften 10, 11 und dem dritten Kieferrelationselement 8 zum liegen kommt. Der Fixierungsgrad kann darüber hinaus weiter erhöht werden, wenn zwischen den zwei Inzisalstiften 10, 11 und der unterseitigen Fläche 8f-14 des dritten Kieferrelationselements Abformmaterial vorgesehen ist.

Da die Schneidezahnkronen unterschiedlicher Probanden unterschiedliche Abmessungen aufweisen können, können die Inzisalstifte 10, 11 oder auch nur einer der beiden, in sagittaler Richtung an dem dritten Kieferrelationselement 8 verschiebbar verbunden werden und so, ggf. mit der Möglichkeit der weiteren Justierung mittels eines oder beider Kugelgelenke gemäß Fig. 3 und 4, den Zahnkronenabmessungen entsprechend justiert werden.

Mit dem Vorteil der Zunahme des oben beschriebenen Fixierungsgrads geht eine Abnahme der Laterotrusionsbewegungen des Unterkiefers 2 einher. Ist dies unter ausschließlicher Verwendung des dritten Kieferrelationselements 8 ohne Inzisalstifte 10, 11 noch uneingeschränkt möglich, so wird diese unter Verwendung beider Inzisalstifte 10, 11 fast vollständig gehemmt.

Bei Anwendung des Inzisalstifts 10 gemäß Fig. 7A sind Laterotrusionen des Unterkiefers weder frei möglich noch vollständig gehemmt, sondern lediglich insoweit möglich, insofern dies dieser Inzisalstift 10 mit seiner Führungsfläche 10f-1 für diese Bewegung zulässt.

In den Fig. 7C bis 7F ist eine mögliche Weiterbildung der in den Fig. 1 bis 4 gezeigten Ausführungsformen der Vorrichtung 4 gezeigt, welche die zuvor angesprochenen beschränkten oder gar gehemmten Laterotrusionsbewegungen in einer vom Untersucher gewünschten Weise für das aktive und das passive Verfahren ermöglicht.

Fig. 7C zeigt die Kieferrelationselemente 7 und 8 mit einer okklusalen Erweiterung 8E sowie den Inzisalstift 10, wobei zwischen dem Inzisalstift 10 und dem dritten Kieferrelationselement 8 bzw. zwischen dem distalen Anteil 8-1 und dem ventralen Anteil 8-2 des dritten Kieferrelationselements 8 eine scharniergelenkige Verbindung 10-300 bzw. 8-300 vorgesehen ist.

Mit den scharniergelenkigen Verbindungen 10-300 und 8-300 wird die Fläche 10f-1 gegenüber den Zahnkronen des Zahnbogens so eingestellt, dass freie Laterotrusionsbewegungen entsprechend der freien Wahl des Probanden freigegeben werden und/oder vorbestimmte Laterotrusionsgewegungen entsprechend des Zwecks geführt werden können.

Die Fig. 7D bis 7F verdeutlichen dies in einer Draufsicht von Fig. 7C, wobei in Fig. 7D die Einstellung des Inzisalstifts 10 und des dritten Kieferrelationselements 8 dem in Fig. 7C entspricht und die okklusale Erweiterung 8E dargestellt ist. In Fig. 7E und 7F ist demgegenüber der dorsale Anteil 8-1 mit dem Uhrzeigersinn und der Inzisalstift 10 gegen den Uhrzeigersinn abgewinkelt bzw. gedreht, so dass der Unterkiefer 2 mit den ventralen Kronenflächen der Zähne Z31, Z32 seines Zahnbogens (Zähne Z37 bis Z47) entlang der dorsalen Fläche 10f-1 des Inzisalstifts 10 und mit seinen Inzisalkanten der Kronen Z31, Z32 entlang der caudalen Fläche 8f-14 des dritten Kieferrelationselements 8 in die Laterotrusionsbewegung nach ventral und rechts (2.b/2.blR) gleitend hinein geführt wird. Dabei ist die in Fig. 7F dargestellte Laterotrusionsbewegung 2.b/2.bIR derart durch die Vorrichtung 4 eingestellt, dass es durch die gesamte überwiegende Rotation mit gering ausgeprägter Laterotrusion des einen Kiefergelenkkopfzentrums 12.a, welches in Fig. 1 dem rechten Kiefergelenkkopfzentrum entspricht, zu keiner Retrusion des auf dieser Seite angeordneten Zahnbogens kommt. Diese Einstellung der Vorrichtung ist beispielhaft, und im Einsatzfall den jeweiligen erforderlichen Bedingungen zielgerichtet anzupassen.

Eine solche Einstellung des Inzisalstifts 10, 11 für bestimmte Laterotrusionsbewegungen ist sinnvoll für die aktive und/oder passive statische und die aktive und/oder passive dynamische Kieferrelationsregistrierung von Laterotrusionsbewegungen zur Herstellung von z.B., UPS, um bei im Probandenmund eingesetzter UPS Laterotrusionsbewegungen zu erlauben, bei denen die eine Seite des Unterkiefers 2 (siehe Fig. 2: rechte Seite des Schädels 1, wobei diese links dargestellt ist) bei einer Laterotrusionsbewegung zu dieser Seite hin (also hier zur rechten Seite hin und somit nach links in Fig. 2) nicht in eine nach hinten gerichtete Bewegung gleitet, die der erwünschten Wirkung der Protrusion der UPS entgegenwirken würde. Ebenso gilt dies bei spiegelbildlicher Betrachtung für die andere (hier also linke) Unterkieferseite in gleicher Weise.

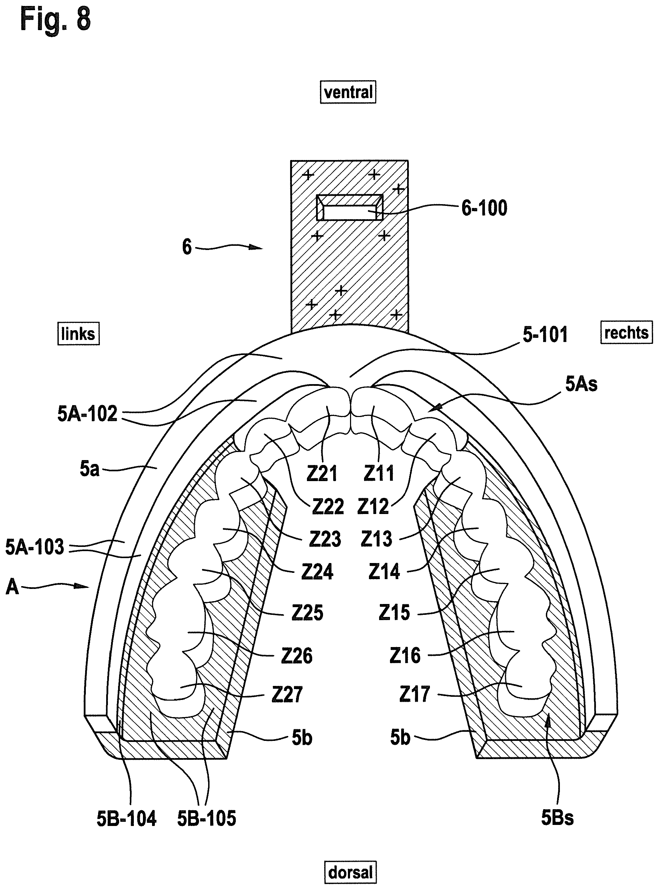

Fig. 8 zeigt eine Aufsicht auf die Oberkiefer-Bissgabel 5 mit dem ersten Kieferrelationselement 6 gemäß der Fig. 1 bis 4. Im Bereich der Frontzähne Z12 bis Z22, bzw. im Falle einer Unterkiefer-Bissgabel im Bereich der Frontzähne Z31 bis Z42 (letztere in Fig. 8 nicht abgebildet), verläuft die Oberkiefer-Bissgabel 5 mit ihrem vorderen zirkulären Anteil 5A-102 durch einen Spalt 5As von den Zahnkronen getrennt und zwar labial dieser Zahnkronen und oberhalb, also cranial, ihrer Inzisalkanten im Oberkiefer 3 (Fig. 8) und unterhalb, also caudal, ihrer Inzisalkanten im Unterkiefer 2 (nicht dargestellt). Die Spaltbreite von 5As im Bereich der Zähne Z11 und Z21 im Oberkiefer 3 (Fig. 8) und im Bereich der Zähne Z31 und Z41 im Unterkiefer 2 wird hierbei durch den Interdentalstift 5-101 vorgegeben, der an der Innenseite von 5A-102 als Fortsatz nach dorsal und mit seiner Spitze approximal bzw. ggf. interdental zwischen Z11 und Z21 bzw. Z31 und Z41 ausgeprägt ist. Der Interdentalstift 5-101 verhindert so das Kippen der Vorrichtung 4. Der vordere zirkuläre Oberkiefer-Bissgabelanteil 5A-102 im Bereich der Frontzähne setzt sich nach hinten, also dorsal, hin im Eck- und Seitenzahnbereich Z13 bis Z17 und Z23 bis Z27 im Oberkiefer 3 bzw. Z33 bis Z37 und Z43 bis Z47 im Unterkiefer 2 mit seinem Spalt 5As als hinterer zirkulärer Oberkiefer-Bissgabelanteil 5A-103 fort und verläuft hier labial- bzw. bukkalseits der Zahnkronenflächen bis unterhalb ihrer Okklusalflächen. Dieser hintere zirkuläre Oberkiefer-Bissgabelanteil 5A-103 mit dem Spalt 5As setzt sich nach unten, also caudal, im Oberkiefer 3 bzw. nach oben, also cranial, im Unterkiefer 2 hin in den unterbrochenen Oberkiefer-Bissgabelanteil 5B-104 mit einem Spalt 5Bs so weit fort, bis der Verlauf dieses Oberkiefer-Bissgabelanteils in einen horizontal verlaufenden Anteil 5B-105 übergeht, um den Okklusalflächen dieser Zähne an-, auf- oder nahe zu liegen. Die Breite und Länge der Oberkiefer-Bissgabel 5 ist auf die Breite und Länge des Zahnbogens des jeweiligen Probanden abzustimmen und/oder entsprechend der international bekannten Normgrößen für Abdrucklöffel auszuwählen.

Der Oberkiefer-Bissgabelanteil 5A wird so weit in das Vestibulum, also die Mundhöhle, geführt, dass eine hinreichende Fixierung der Oberkiefer-Bissgabel 5 durch die mit Abdruckmaterial vermittelte Auflagerung auf den Zähnen oder den Zähnen und dem Zahnfleisch des Alveolarfortsatzes entsteht.

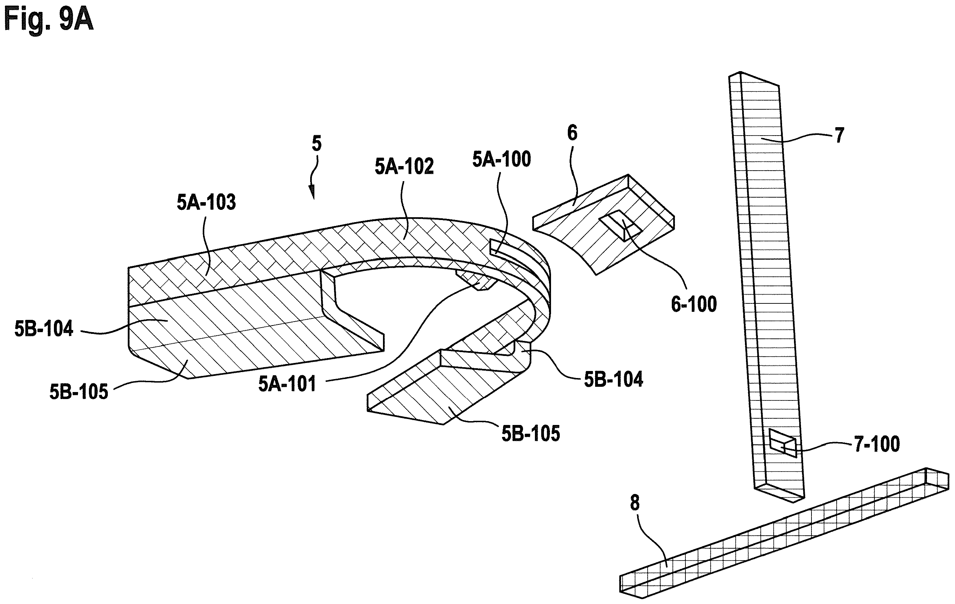

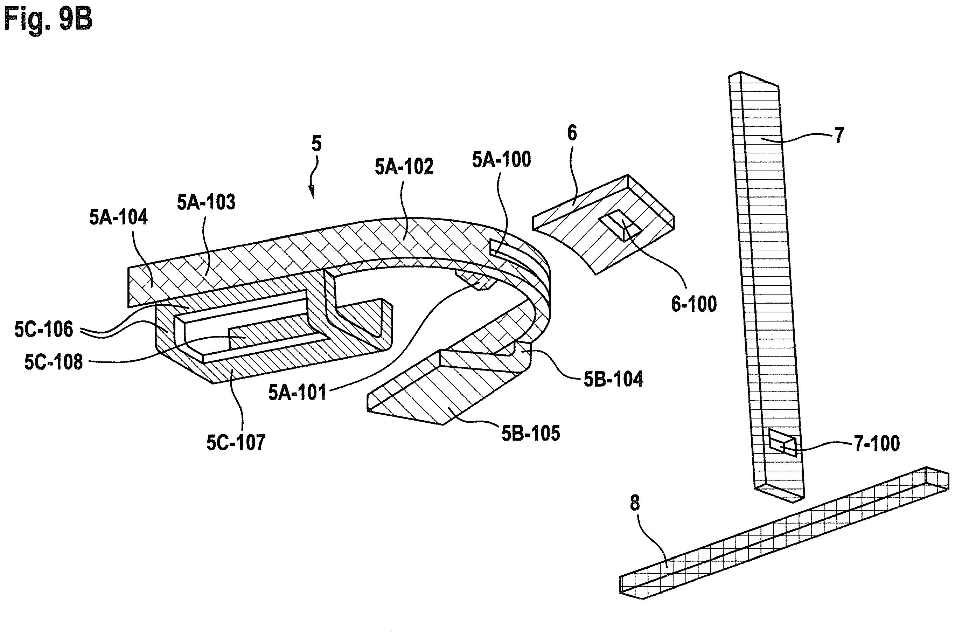

Fig. 9A zeigt eine Explosionsdarstellung der Oberkiefer-Bissgabel 5 mit der Vorrichtung 4 gemäß Fig. 1 und 2 bzw. der Oberkiefer-Bissgabel 5 mit dem ersten Kieferrelationselement 6 gemäß Fig. 8. Fig. 9B zeigt eine weitere mögliche Ausprägungsform des unterbrochenen Oberkiefer-Bissgabelanteils, welcher sich aus einer Änderung der Anteile 5B-104 und 5B-105 aus Fig. 9A zusammensetzt und weitere Aussparungen im Zahnkronenbereich aufweist.

Das erste Kieferrelationselement 6 ist durch eine Klemmpassung in einer Aussparung 5A-100 der Oberkiefer-Bissgabel 5 reversibel fixiert. Dies ermöglicht die Verwendung einer Vorrichtung 4 an Oberkiefer-Bissgabeln mit unterschiedlichen Größen, die den Standardgrößen der gängigen Oberkiefer-Bissgabeln in der Zahnmedizin entsprechen. Ebenso über eine Klemmpassung werden das zweite Kieferrelationselement 7 in einer Aussparung 6-100 mit dem ersten Kieferrelationselement 6, und das dritte Kieferrelationselement 8 in einer Aussparung 7-100 mit dem zweiten Kieferrelationselement 7 verbunden. Diese Klemmpassungen ermöglichen eine ausreichend feste Verbindung zwischen den Elementen und lassen dennoch eine Verschiebung im Sinne einer Justierung zueinander für die Ausrichtung auf die jeweilige Kieferrelation zu.

Anstelle von Klemmpassungen können auch geführte Passungen mit Feststellschrauben (nicht gezeigt) und anstelle der Verschiebung eine Zahnradführung über Rändel (letzteres nicht abgebildet) eingesetzt werden, sofern sie die Anforderungen an eine Justierung erfüllen.

Die weitere Ausführungsform des unterbrochenen Oberkiefer-Bissgabelanteils (Fig. 9B), aufweisend die Anteile 5C-106, 5C-107 und 5C-108, erstreckt sich nicht bis zum Ende der Zahnreihe Z17, Z27, weist einen zirkulären distalen Anteil 5A-104 und lässt die Anteile der seitlichen und caudalen Flächen der Zahnkronen teilweise frei und ermöglicht so zusätzlich zu dem Scannen der ausgesparten Zahnkronenanteile der Front- bzw. der Front- und Eckzähne auch das Scannen dieser seitlichen und hinteren ausgesparten Zahnkronenanteile bei eingesetzter Oberkiefer-Bissgabel 5, wodurch der Überlagerungsvorgang unterschiedlicher Scans erhöht wird. Ferner ist zur Erhöhung der Retention der horizontale Anteil 5C-107 entlang der palatinalen Kronenseite der Zahnkronen fortgesetzt.

An dieser Stelle wird noch einmal darauf hingewiesen, dass die Ausführungsform, welche in den Fig. 1 und 2, ggf. zusammen mit Fig 7A und 7B, gezeigt ist, insbesondere zur statischen Registrierung der Kieferrelation und die Ausführungsform, welche in den Fig. 3 und 4, ggf. zusammen mit Fig. 7C bis 7F, gezeigt ist, insbesondere zur dynamischen Registrierung bei Unterkieferbewegung ausgelegt ist. Auch die in den Fig. 1 und 2 gezeigte Ausführungsform kann zur dynamischen Registrierung genutzt werden, jedoch ist das dynamische Anwendungsspektrum verglichen mit der in den Fig. 3 und 4 gezeigten Ausführungsform eingeschränkt.

Grundsätzlich können derartige Registrierungen der Kieferrelationen nur dann gelingen, wenn sich die Oberkieferzahnkronenanteile und das eine Ende der Vorrichtung sowie die Unterkieferzahnkronenanteile und das andere Ende der Vorrichtung im Erfassungsbereich von Intraoralscannern befinden. Insofern ist das Gelingen der Kieferrelationsregistrierung abhängig von einerseits den technischen Gegebenheiten bzgl. Hardware, bspw. Intraoralscanner, sowie Software, bspw. EDV, und andererseits von den technischen Gegebenheiten der Vorrichtung.

Mann kann sagen, dass die Vorrichtung 4, insbesondere die Einrichtung 45 als eine Vorrichtung zur Bereitstellung von Daten für die Bestimmung der relativen Position von den räumlichen Oberflächendaten einer oder mehrerer Zahnkronen und/oder Zahnkronenanteile im Unterkiefer zu den räumlichen Oberflächendaten einer oder mehrerer Zahnkronen und/oder Zahnkronenanteile im Oberkiefer angewendet werden kann, wobei ein Anteil mit zumindest einem Anteil der Zahnkronen des Oberkiefers reversibel aber arbeitsstabil verbunden ist, und ein anderer Anteil entweder für eine Position des Unterkiefers in einer Unterkieferstellung (Fig. 1 und 2, Fig. 7A und 7B) oder für mehrere Positionen des Unterkiefers während einer Unterkieferbewegung (Fig. 3 und 4, Fig. 7C bis 7F) mindestens einem Zahnkronenanteil des Unterkiefers an- und/oder auf- und/oder nahe bei liegt und dies vollständig und/oder unvollständig umfasst und/oder mit Abdruckmaterial vermittelt an-, auf- oder nahe bei liegt oder umfasst.

Dabei kann die Vorrichtung, insbesondere die Einrichtung aus mehreren einzelnen Teilen bestehen, namentlich aus der Oberkiefer-Bissgabel, oder einem Bisslöffel bzw. Abdrucklöffel oder einer Paraokklusalbissgabel an ihrem einen Ende, von dieser horizontal nach vom hin aus der Mundhöhle des Probanden heraus ausgeprägtes erstes Kieferrelationselement, von diesem nach, vorzugsweise vertikal, unten hin ausgeprägtes, außerhalb der Mundhöhle des Probanden liegendes zweites Kieferrelationselement und von diesem nach, vorzugsweise horizontal, hinten hin in die Mundhöhle des Probanden hinein an dem anderen Ende der Vorrichtung liegendes drittes Kieferrelationselement, wobei mindestens eines dieser Elemente in seiner Achsrichtung verschiebbar mit mindestens einem anderen Element verbunden ist.

Dabei ist es möglich, dass sich mindestens innerhalb eines Kieferrelationselements ein arretierbares Kugelgelenk und/oder mindestens innerhalb eines Kieferrelationselements ein scharnierartiges Gelenk befindet, die eine Ausrichtung des distalen Anteils des dritten Kieferrelationselements in allen Raumrichtung erlaubt, u.a. zur Ausrichtung der unterseitigen (caudalen) Fläche dieses distalen Endes entsprechend der gewählten Protrusionebene.

Zusätzlich kann sich am distalen Anteil des dritten Kieferrelationselements ein, vorzugsweise vertikal, nach unten hin ausgeprägter, zu der Unterkieferzahnreihe vorderseitig gelegener Inzisalstift angeordnet sein, der mit seiner zu den Zahnkronen gerichteten (dorsalen) Fläche entweder für eine Position des Unterkiefers in einer Unterkieferstellung (Fig. 4 und 7A) oder für mehrere Positionen des Unterkiefers während einer Unterkieferbewegung mindestens einen nach vorne (ventral, labial) weisenden Zahnkronenanteil des Unterkiefers an oder nahe bei liegt (Fig. 3 in Verbindung mit 4, Fig. 7E in Verbindung mit Fig. 7F) und/oder ein solcher vergleichbarer Inzisalstift zu der Unterkieferzahnreihe hinterseitig gelegen angeordnet ist, der mit seiner zu den Zahnkronen gerichteten Fläche entweder für eine Position des Unterkiefers in einer Unterkieferstellung (Fig. 7B) oder für mehrere Positionen des Unterkiefers während einer Unterkieferbewegung mindestens einen nach hinten (dorsal, oral) weisenden Zahnkronenanteil des Unterkiefers an oder nahe bei liegt (nicht dargestellt), wobei kein, ein oder beide Inzisalstifte entsprechend der Achsrichtung des Endpunkts verschoben werden können, so dass bei Anwendung beider Inzisalstifte (nicht dargestellt) der Unterkiefer in einer bestimmten Position gegen Vorschub (Protrusion), Rückschub (Retrusion) und Zubiss (Kieferschließung) gesichert werden kann.

Ferner kann der vorderseitig gelegene Inzisalstift derart weit nach caudal mit seiner dorsalen Fläche ausgeprägt sein, dass diese Fläche für eine Position des Unterkiefers in einer Unterkieferstellung (Fig. 7A) oder für mehrere Positionen des Unterkiefers während einer Unterkieferbewegung (vgl. Fig. 3 und 4) mindestens einen nach vorne (ventral, labial) weisenden Zahnkronenanteil des Unterkiefers an oder nahe bei liegt.

Der vorderseitig gelegene Inzisalstift 10 kann mit dem distalen Ende des dritten Kieferrelationselements in der Horizontalebene drehbar oder gelenkig verbunden sein, u.a. zur Ausrichtung des vorderseitigen Inzisalstifts derart, dass dieser für eine Position des Unterkiefers in einer Unterkieferstellung (Fig. 7A) oder für mehrere Positionen des Unterkiefers während einer Unterkieferbewegung (vgl. Fig. 3, 4 und 7E mit Fig. 7F) mindestens einen nach vorne (ventral, labial) weisenden Zahnkronenanteil des Unterkiefers an oder nahe bei liegt.

Der distale Anteil des dritten Kieferrelationselements kann sich entsprechend des Verlaufs der Zahnkronenflächen beider Kieferseiten des Unterkiefers nach dorsal und lateral weiter ausprägen (Fig. 7C bis 7E), wobei diese Ausprägung den Okklusalflächen an- und/oder auf- und/oder nahe bei liegt und/oder ganz oder teilweise umfasst und/oder durch Abdruckmaterial den Okklusalflächen vollständig oder teilweise aufliegt und/oder mit diesen reversibel verbunden ist.

Ferner kann bei der Vorrichtung 4 das erste Kieferrelationselement 6 mit dem zweiten Kieferrelationselement 7 und das craniale und das caudale Ende des zweiten Kieferrelationselements 7 miteinander gelenkig und das caudale Ende des zweiten Kieferrelationselements 7 mit dem dritten Kieferrelationselement 8 verschieblich miteinander verbunden sein.

Ferner kann die Vorrichtung an ihrem einen Ende derart als Oberkiefer-Bissgabel ausgeprägt sein, dass sie den Oberkieferzahnkronen an- und/oder auf- und/oder nahe bei liegt und/oder diese mehr oder weniger umfassen kann, wobei mindestens ein Teil der Frontzahnkronen ausgespart wird und auch andere oder weitere Zahnkronenanteile ausgespart werden können und diese Oberkiefer-Bissgabel individuell nach vorheriger Abdrucknahme im zahntechnischen Labor konventionell analog und/oder digital nach dem CAD/CAM-Verfahren durch Fräsen, Drucken, Sintern etc. hergestellt wird oder konfektioniert im industriellen Verfahren entsprechend der gängigen Größen für in der Zahnmedizin bekannte Abdrucklöffel hergestellt sind.

Als Alternative kann die Oberkiefer-Bissgabel auch entsprechend einer in der Zahnmedizin bekannten Bissgabel bzw. Paraokklusalbissgabel ausgeprägt sein.

Ferner ist es möglich, eine Vorrichtung mit bekannten dreidimensionalen Oberflächendaten und/oder konfektionierte Anteile für die Vorrichtung zu verwenden.

Zusätzlich kann mindestens eins der Kieferrelationselemente 6, 7, 8, und bei Anwendung des Inzisalstiftes / der Inzisalstifte 10, 11 diese ebenso, mit Positionsmarkern (vgl. Markierung 200 in Fig. 1 und Fig. 7A) und/oder mit Markierungen, z.B. Millimetermarkierungen, farbigen Markierungen, Zeichenmarkierungen, Hologrammen u.v.a. versehen sein, die Daten über ihre räumliche Position auf der dreidimensionalen Oberfläche des jeweiligen Elements beinhalten. Die relative räumliche Zuordnung der Kieferrelationselemente, und ggf. des Inzisalstifts / der Inzisalstifte (10, 11), und der Oberkiefer-Bissgabel zueinander sowie die Zuordnung der Oberkiefer-Bissgabel zu den von der Oberkieferbissgabel ausgesparten Oberkieferzahnkronenanteilen und ggf. die Zuordnung des Inzisalstifts / der Inzisalstifte zu den anliegenden oder beabstandeten Zahnkronen und/oder Zahnkronenanteilen im Unterkiefer 2 kann so unter Anwendung eines digitalen (maschinellen) Registrierverfahrens (z. B. optische Scanner) präzisiert und beschleunigt werden, da die vollständige Registrierung der gesamten Oberflächen der Einrichtung 45 entfällt.

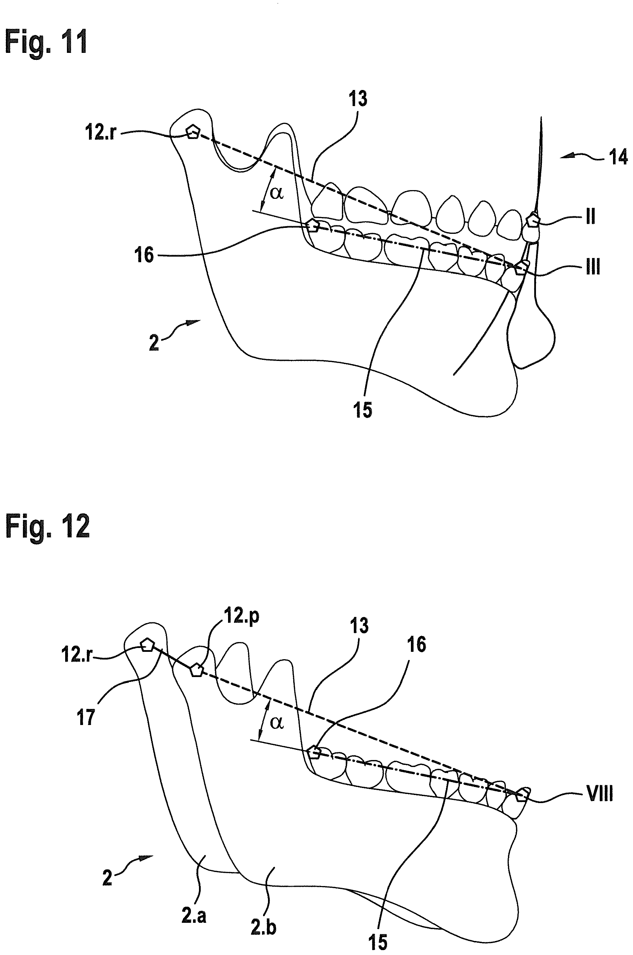

Die Fig. 11 und 12 zeigen zwei Registrierschritte des erfindungsgemäßen Verfahrens, welche die geometrische Ermittlung sämtlicher Kieferrelationspositionen ermöglichen.

Fig. 11 zeigt einen ersten Registrierschritt, der zur Ortsbestimmung einer ersten Kiefergelenkkopfzentrumsposition 12.r dient. Dabei wird die Kieferrelation aktiv und digital registriert, wobei der Unterkiefer 2 im Kiefergelenkkopfzentrum 12 eine Rotationsbewegung ausführt. Der Unterkiefer 2 bewegt sich dabei mit seinem Inzisalpunkt 24 von II nach III bzw. von III nach II (siehe auch Fig. 5). Es erfolgt dann die Bestimmung einer ersten Strecke 13, die sich zwischen der ersten Kiefergelenkkopfzentrumsposition 12.r und einem, vorzugsweise vorbestimmten, mesialen Punkt erstreckt, der mit dem Scan am Unterkiefer 2 erfasst wurde, bspw. auf der Kreisbahn 14, die sich durch die Rotationsbewegung des Unterkiefers 2 zwischen den Punkten II und III ergibt, hier bspw. der Punkt III (siehe Fig. 11). Anschließend erfolgt die Bestimmung einer zweiten Strecke 15, die sich zwischen dem mesialen Punkt, hier bspw. der Punkt III, und einem distalen Punkt erstreckt, der mit dem Scan am Unterkiefer 2 erfasst wurde, hier bspw. der Punkt 16 an einem distalen Zahnhöcker der Zahnreihe; und die Bestimmung eines Winkels α zwischen der Strecke 13 und der Strecke 15.

Im zweiten Registrierschritt (Fig. 12) erfolgt bei einer Unterkieferbewegung, z. B. einer Unterkieferprotrusion oder einer Unterkieferlaterotrusion (aktiv oder passiv), die Ortsbestimmung derselben mesialen und distalen Punkte die mit dem Scan am Unterkiefer 2 erfasst wurden, mit dem Inzisalpunkt, hier bspw. VIII (siehe auch Fig. 5), bzw. 16. Anschließend erfolgt die Bestimmung einer zweiten Kiefergelenkkopfzentrumsposition 12.p am distalen Ende der Strecke 13, nachdem diese Strecke an seinem mesialen Ende am Punkt VIII angelegt und zur Strecke 15 (zwischen VIII und 16) um den Winkel α geneigt wurde.

Eine Strecke 17 zwischen der ersten Kiefergelenkkopfzentrumsposition 12.r und der zweiten Kiefergelenkkopfzentrumsposition 12.p entspricht dem Kiefergelenkkopfbahnverlauf, mit dem sich in Kenntnis von der Strecke 13 und dem Winkel α die Kieferrelation geometrisch bestimmen lässt.

## Patentansprüche

1. Vorrichtung (4) zur Erfassung von Kieferrelationsdaten eines Menschen, mit
einem ersten länglichen Kieferrelationselement (6), welches sich im am Menschen eingesetzten Zustand ventral erstreckt;
mit einem als eine zahnbogenförmige Oberkiefer-Bissgabel (5) ausgebildeten Oberkiefer-Anlageelement, welches zumindest an offenen Endabschnitten Aufnahmebereiche (5B-104, 5B-105) besitzt, die zur reversiblen, arbeitsstabilen Aufnahme von Oberkiefer-Zahnkronen konfiguriert sind, und im Bereich des Bogenscheitelpunkts mit dem ersten Kieferrelationselement (6) fest verbunden ist,
einem zweiten länglichen Kieferrelationselement (7), welches sich relativ zum ersten Kieferrelationselement (6) quer und caudal erstreckt; und
einem dritten länglichen Kieferrelationselement (8), welches sich relativ zum zweiten Kieferrelationselement (7) quer und dorsal erstreckt, wobei das zweite Kieferrelationselement (7) in seiner Erstreckungsrichtung verschieblich mit dem ersten Kieferrelationselement (6) und das dritte Kieferrelationselement (8) in seiner Erstreckungsrichtung verschieblich mit dem zweiten Kieferrelationselement (7) derart verbunden ist, dass das zweite oder dritte Kieferrelationselement (7; 8) zur Auflage auf wenigstens einer Inzisal- oder Okklusalfläche von einer oder mehrerer Unterkiefer-Zahnkronen konfiguriert ist oder dazu konfiguriert ist, beabstandet zu den Unterkiefer-Zahnkronen von einer digitalen Erfassungseinrichtung mit diesen zusammen erfassbar angeordnet zu sein.

2. Vorrichtung (4) nach Anspruch 1, **dadurch gekennzeichnet, dass** das erste und/oder das zweite und/oder das dritte Kieferrelationselement (6; 7; 8) entlang seiner Erstreckungsrichtung jeweils zumindest eine Markierung (200) aufweist, die zur eindeutigen Erfassung von Positionen der Kieferrelationselemente zur Ermittlung von Kieferrelationspositionen von einer Erfassungseinrichtung erfassbar sind, insbesondere wobei die Markierungen (200) an Schnittpunkten der Kieferrelationselemente zur Erfassung ihrer relativen Position zueinander angeordnet sind und/oder die Markierungen (200) zur analogen oder zur digitalen Erfassung konfiguriert sind.

3. Vorrichtung (4) nach einem der Ansprüche 1 bis 2, weiterhin aufweisend das Oberkiefer-Anlageelement (5), wobei das Oberkiefer-Anlageelement (5) zumindest eine Markierung (200) an oder im Grenzbereich zu Aussparungen (9) zur Erfassung seiner relativen Position zu den Zahnkronen im Oberkiefer (3) oder zu den Zahnkronen im Unterkiefer (2) zur digitalen maschinellen Erfassung aufweist.

4. Vorrichtung (4) nach einem der Ansprüche 1 bis 3, ferner mit einem ersten Inzisalstift (10), welcher sich relativ zum zweiten oder zum dritten Kieferrelationselement (7; 8) quer und caudal erstreckt und mit dem zweiten oder dritten Kieferrelationselement (7; 8) entlang dessen Erstreckungsrichtung verschieblich und/oder drehbar verbunden ist, wobei der erste Inzisalstift (10) beabstandet zu zumindest einer Unterkiefer-Zahnkrone positionierbar oder zur dorsalen oder ventralen Anlage an zumindest einer Unterkiefer-Zahnkrone konfiguriert ist.

5. Vorrichtung (4) nach Anspruch 4, ferner mit einem zweiten Inzisalstift (11), welcher sich relativ zum zweiten oder zum dritten Kieferrelationselement (7; 8) quer und caudal erstreckt und mit dem zweiten oder dritten Kieferrelationselement (7; 8) entlang dessen Erstreckungsrichtung verschieblich und/oder drehbar verbunden ist, wobei der zweite Inzisalstift (11) zur Anlage an oder beabstandet zu der zumindest einen Unterkiefer-Zahnkrone dem ersten Inzisalstift (10) gegenüberliegend angeordnet ist.

6. Vorrichtung (4) nach Anspruch 4 oder 5, **dadurch gekennzeichnet, dass** der erste Inzisalstift (10) und/oder der zweite Inzisalstift (11) entlang seiner Erstreckungsrichtung jeweils zumindest eine Markierung (200) aufweist, die zur eindeutigen Erfassung von Positionen der Inzisalstifte (10, 11) zur Ermittlung von Kieferrelationspositionen von einer Erfassungseinrichtung erfassbar sind, insbesondere wobei die Markierungen (200) an Schnittpunkten der Inzisalstifte (10, 11) und/oder an Schnittpunkten zwischen einem Inzisalstift (10; 11) und/oder beiden Inzisalstiften (10, 11) und dem zweiten Kieferrelationselement (7) oder dem dritten Kieferrelationselement (8) zur Erfassung ihrer relativen Position zueinander angeordnet sind und/oder die Markierungen (200) zur analogen oder zur digitalen Erfassung konfiguriert sind.

7. Vorrichtung (4) nach einem der Ansprüche 1 bis 6, wobei mindestens ein Kieferrelationselement (6; 7; 8) einen dorsalen Abschnitt und einen ventralen Abschnitt aufweist, die über eine Gelenkverbindung (300; 400) miteinander verbunden sind, insbesondere wobei die Gelenkverbindung (300; 400) derart eingerichtet ist, dass der distale Abschnitt des mindestens einen Kieferrelationselements (6; 7; 8) in wenigstens drei Freiheitsgraden bewegbar ist.

8. Vorrichtung (4) nach Anspruch 7, wobei sich der dorsale Anteil (8E) des dritten Kieferrelationselements (8) entlang der Unterkiefer-Zahnkronen weiter nach dorsal und lateral ausprägt und den Okklusalflächen der Unterkiefer-Zahnkronen an- und/oder auf- und/oder nahe bei liegt und/oder ganz oder teilweise umfasst und/oder durch Abdruckmaterial den Okklusalflächen vollständig oder teilweise aufliegt und/oder mit diesen reversibel verbunden ist.

9. Vorrichtung (4) nach einem der Ansprüche 1 bis 8, wobei die Aufnahmebereiche (5B-104, 5B-105) der Oberkiefer-Bissgabel (5) einen Bereich (9) der Frontzahnkronen und / oder Frontzahnkronenanteile (Z12-Z22) aussparen.

10. Vorrichtung (4) nach Anspruch 9, wobei die Aufnahmebereiche (5B-104, 5B-105) der Oberkiefer-Bissgabel (5) ferner weitere oder andere zu den Frontzahnkronen (Z12-Z22) distal angeordnete Zahnkronen und/oder Zahnkronenanteile ausspart.

11. Vorrichtung (4) nach einem der Ansprüche 9 bis 10, wobei die Oberkiefer-Bissgabel (5) und das erste Kieferrelationselement (6) integral ausgebildet sind.

12. Vorrichtung (4) nach einem der Ansprüche 9 bis 11, wobei die Aufnahmebereiche (5B-104, 5B-105) auf der im eingesetzten Zustand den Oberkiefer-Zahnkronen zugewandten Seite jeweils eine Ausnehmung aufweisen.

13. Vorrichtung (4) nach einem der Ansprüche 9 bis 12, wobei die Aufnahmebereiche (5B-104, 5B-105) an ihrer Umfangsfläche mehrere kleine Durchgangslöcher aufweisen.

14. Verfahren zur Erfassung von Kieferrelationsdaten eines Menschen unter Verwendung einer Vorrichtung (4) nach einem der vorstehenden Ansprüche, wobei zumindest eine Markierung (200) in einem Grenzbereich zu den Zahnkronen und/oder Zahnkronenanteilen hin am Oberkiefer-Anlageelement (5) sowie je an dem ersten bis dritten Kieferrelationselement (6, 7, 8) vorgesehen sind, und unter Verwendung eines Scanners, bei dem die Markierungen (200) zur eindeutigen Erfassung von Positionen der Kieferrelationselemente (6, 7, 8) zur Ermittlung von Kieferrelationspositionen von dem Scanner erfasst werden.

15. Verfahren nach Anspruch 14, wobei zumindest je eine Markierung (200) an dem ersten und/oder zweiten Inzisalstift (10, 11) vorgesehen ist, die zur eindeutigen Erfassung von Positionen des ersten und/oder zweiten Inzisalstifts (10, 11) zur Ermittlung von Kieferrelationspositionen von dem Scanner erfasst werden, insbesondere wobei das Verfahren die folgenden Schritte aufweist:
(1) Bestimmen einer ersten Kieferkopfzentrumsposition (12.r) durch eine aktive digitale Registrierung der Kieferrelation, bei der der Unterkiefer (2) im Kiefergelenkkopfzentrum (12) eine Rotationsbewegung ausführt;
(2) Bestimmen einer ersten Strecke (13) zwischen dem Kiefergelenkkopfzentrum (12.r) und einem vorbestimmten mesialen Punkt am Unterkiefer (2);
(3) Bestimmen einer zweiten Strecke (15) zwischen dem vorbestimmten mesialen Punkt am Unterkiefer (2) und einem vorbestimmten distalen Punkt (16) am Unterkiefer (2);
(4) Bestimmen eines Winkels (α) zwischen der ersten Strecke (13) und der zweiten Strecke (15);
(5) Bestimmen der Positionen des vorbestimmten mesialen sowie des vorbestimmten distalen Punkts durch eine Unterkieferbewegung unter Zuhilfenahme eines vorbestimmten Referenzpunkts am Unterkiefer (2);
(6) Bestimmen einer zweiten Kiefergelenkkopfzentrumsposition (12.p) unter Zuhilfenahme der ersten und zweiten Strecke (13, 15) sowie dem dazwischenliegenden Winkel (α); und
(7) Bestimmen eines Kiefergelenkkopfbahnverlaufs (17).

## Claims

1. A device (4) for detecting jaw relation data of a person, comprising:
a first elongated jaw relation element (6) extending ventrally when used on the person;
having an upper jaw fitting element adapted as a dental arch-shaped upper jaw bite fork (5), which has, at least at the open end sections, receiving areas (5B-104, 5B-105) configured to reversibly receive upper jaw tooth crowns, in a manner as to be stable during manipulation, and which is fixed to the first jaw relation element (6) in the area of vertex of the arch;
a second elongated jaw relation element (7) extending transversely in relation to the first jaw relation element (6) and caudally; and
a third elongated jaw relation element (8) extending transversely in relation to the second jaw relation element (7) and dorsally, wherein the second jaw relation element (7) is, in its direction of extension, movably connected to the first jaw relation element (6), and the third jaw relation element (8) is, in its direction of extension, movably connected to the second jaw relation element (7) such that the second or the third jaw relation element (7; 8) is configured to rest on at least one incisal or occlusal surface of one or more lower jaw tooth crowns, or configured to be arranged spaced apart from the lower jaw tooth crowns in such a manner that it can be detected by a digital detection means together with the lower jaw tooth crowns.

2. The device (4) according to claim 1, **characterized in that** the first and/or the second and/or the third jaw relation element (6; 7; 8), in their direction of extension, each comprise at least one marking (200) which can be detected by a detection means for unambiguous detection of positions of the jaw relation elements for identifying jaw relation positions, in particular, wherein the markings (200) are arranged at intersection points of the jaw relation elements for detecting their positions in relation to each other, and/or wherein the markings (200) are configured for analog and/or for digital detection.

3. The device (4) according to any of claims 1 to 2, further comprising the upper jaw fitting element (5), wherein the upper jaw fitting element (5) comprises at least one marking (200) at or in the area bordering on cut-outs (9) for detecting its position in relation to the tooth crowns in the upper jaw (3) or to the tooth crowns in the lower jaw (2) for digital machine detection.

4. The device (4) according to any of claims 1 to 3, further comprising a first incisal pin (10) extending transversely in relation to the second or the third jaw relation element (7; 8) and caudally and being movably and/or rotatably connected to the second or the third jaw relation element (7; 8) in the direction of extension thereof, wherein the first incisal pin (10) can be positioned to be spaced apart from at least one lower jaw tooth crown, or is configured to rest dorsally or ventrally against at least one lower jaw tooth crown.

5. The device (4) according to claim 4, further comprising a second incisal pin (11) extending transversely in relation to the second or the third jaw relation element (7; 8) and caudally and being movably and/or rotatably connected to the second or the third jaw relation element (7; 8) in the direction of extension thereof, wherein the second incisal pin (11) is arranged opposite the first incisal pin (10) for contact with or spaced apart from the at least one lower jaw tooth crown.

6. The device (4) according to claim 4 or 5, **characterized in that** the first incisal pin (10) and/or the second incisal pin (11) each comprise, in their direction of extension, at least one marking (200) which can be detected by a detection means for unambiguous detection of positions of the incisal pins (10, 11) for identifying jaw relation positions, in particular, wherein the markings (200) are arranged at intersection points of the incisal pins (10, 11), and/or at intersection points between an incisal pin (10; 11) and/or both incisal pins (10, 11) and the second jaw relation element (7) or the third jaw relation element (8) for detecting their positions in relation to each other, and/or wherein the markings (200) are configured for analog and/or for digital detection.

7. The device (4) according to any of claims 1 to 6, wherein at least one jaw relation element (6; 7; 8) comprises a dorsal section and a ventral section, which are connected to each other via an articulated joint (300; 400), in particular, wherein the articulated joint (300; 400) is arranged such that the distal section of the at least one jaw relation element (6; 7; 8) can be moved in at least three degrees of freedom.

8. The device (4) according to claim 7, wherein the dorsal portion (8E) of the third jaw relation element (8) further extends in the dorsal and lateral direction along the lower jaw tooth crowns and rests against and/or close to the occlusal surfaces of the lower jaw tooth crowns, and/or completely or partially covers them, and/or rests completely or partially on the occlusal surfaces with impression material in between, and/or is reversibly connected thereto.

9. The device (4) according to any of claims 1 to 8, wherein the receiving areas (5B-104, 5B-105) of the upper jaw bite fork (5) leave out an area (9) of the anterior tooth crowns and/or anterior tooth crown portions (Z12-Z22).

10. The device (4) according to claim 9, wherein the receiving areas (5B-104, 5B-105) of the upper jaw bite fork (5) also leave out further or other tooth crowns and/or tooth crown portions arranged distally to the anterior tooth crowns (Z12-Z22).

11. The device (4) according to any of claims 9 to 10, wherein the upper jaw bite fork (5) and the first jaw relation element (6) are integrally formed.

12. The device (4) according to any of claims 9 to 11, wherein the receiving areas (5B-104, 5B-105) each have a cut-out on the side facing the upper jaw tooth crowns in the inserted state.

13. The device (4) according to any of claims 9 to 12, wherein the receiving areas (5B-104, 5B-105) have a plurality of small through-holes on their circumferential surface.

14. A method for detecting jaw relation data of a person using a device (4) according to any of the preceding claims, wherein at least one marking (200) is provided in the area bordering on the tooth crowns and/or tooth crown portions on the upper jaw fitting element (5) and on each of the first to third jaw relation elements (6, 7, 8), and using a scanner, wherein the markings (200) are detected by the scanner for unambiguous detection of positions of the jaw relation elements (6, 7, 8) for identifying jaw relation positions.

15. The method according to claim 14, wherein at least one marking (200) is provided on each of the first and/or second incisal pin (10, 11), which is detected by the scanner for unambiguous detection of positions of the first and/or second incisal pin (10, 11) for identifying jaw relation positions, in particular, wherein the method comprises the following steps:
(1) determining a first mandibular condyle center position (12.r) by an active digital registration of the jaw relation, wherein the lower jaw (2) performs a rotational movement in the mandibular condyle center (12);
(2) determining a first distance (13) between the mandibular condyle center (12.r) and a predetermined mesial point on the lower jaw (2);
(3) determining a second distance (15) between the predetermined mesial point on the lower jaw (2) and a predetermined distal point (16) on the lower jaw (2);
(4) determining an angle (α) between the first distance (13) and the second distance (15);
(5) determining the positions of the predetermined mesial point and the predetermined distal point by a lower jaw movement with the aid of a predetermined reference point on the lower jaw (2);
(6) determining a second mandibular condyle center position (12.p) with the aid of the first and second distances (13, 15) and the angle (α) therebetween; and
(7) determining a mandibular condyle path (17).

## Revendications

1. Dispositif (4) de saisie de données de relation intermaxillaire d'un humain, doté
d'un premier élément de relation intermaxillaire (6) allongé qui, à l'état placé sur un humain, s'étend ventralement;
d'un élément d'application pour mâchoire supérieure réalisé sous forme de fourchette occlusale pour mâchoire supérieure (5) en forme d'arcade dentaire, lequel possède, au moins à des sections d'extrémité ouvertes, des zones de réception (5B-104, 5B-105) qui sont configurées pour recevoir, réversiblement et avec stabilité opérationnelle, des couronnes dentaires de mâchoire supérieure, et est relié à demeure au premier élément de relation intermaxillaire (6) dans la zone du point de sommet d'arc,
d'un deuxième élément de relation intermaxillaire (7) allongé qui s'étend transversalement et caudalement par rapport au premier élément de relation intermaxillaire (6); et
d'un troisième élément de relation intermaxillaire (8) allongé qui s'étend transversalement et dorsalement par rapport au deuxième élément de relation (7) intermaxillaire, cependant que le deuxième élément de relation intermaxillaire (7) est, dans sa direction d'extension, relié de telle façon, de manière déplaçable, avec le premier élément de relation intermaxillaire (6), et le troisième élément de relation intermaxillaire (8) est, dans sa direction d'extension, relié de telle façon, de manière déplaçable, avec le deuxième élément de relation intermaxillaire (7), que le deuxième ou troisième élément de relation intermaxillaire (7; 8) est configuré pour la pose sur au moins une surface incisale ou occlusale d'une ou de plusieurs couronnes dentaires de mâchoire inférieure, ou est configuré pour être, de manière espacée par rapport aux couronnes dentaires de mâchoire inférieure, disposé de manière à pouvoir être saisi avec ces dernières par un équipement de saisie numérique.

2. Dispositif (4) selon la revendication 1, **caractérisé en ce que** le premier et/ou le deuxième et/ ou le troisième élément de relation intermaxillaire (6; 7; 8) comporte le long de sa direction d'extension respectivement au moins un marquage (200) qui peuvent être saisis par un équipement de saisie pour la saisie univoque de positions des éléments de relation intermaxillaire pour la détermination de positions de relation intermaxillaire, en particulier cependant que les marquages (200) sont disposés à des points d'intersection des éléments de relation intermaxillaire pour la saisie de leur position relative entre eux, et/ou les marquages (200) sont configurés pour la saisie analogique ou numérique.

3. Dispositif (4) selon une des revendications de 1 à 2, comportant en outre l'élément d'application pour mâchoire supérieure (5), cependant que l'élément d'application pour mâchoire supérieure (5) comporte, pour la saisie numérique par machine, au moins un marquage (200) à des ou à la limite d'évidements (9) pour la saisie de sa position par rapport aux couronnes dentaires dans la mâchoire supérieure (3) ou aux couronnes dentaires dans la mâchoire inférieure (2).

4. Dispositif (4) selon une des revendications de 1 à 3, ayant en outre une première tige incisive (10) qui s'étend transversalement et caudalement par rapport au deuxième ou au troisième élément de relation intermaxillaire (7; 8) et est relié, de manière déplaçable et/ou pivotable, avec le deuxième ou troisième élément de relation intermaxillaire (7 ; 8) le long de sa direction d'extension, cependant que la première tige incisive (10) est configurée de manière à pouvoir être positionnée de manière espacée par rapport à au moins une couronne dentaire de mâchoire inférieure ou pour être appliquée dorsalement ou ventralement à au moins une couronne dentaire de mâchoire inférieure.

5. Dispositif (4) selon la revendication 4, ayant en outre une deuxième tige incisive (11) qui s'étend transversalement et caudalement par rapport au deuxième ou au troisième élément de relation intermaxillaire (7; 8) et est reliée, de manière déplaçable et/ou pivotable, avec le deuxième ou troisième élément de relation intermaxillaire (7 ; 8) le long de sa direction d'extension, cependant que la deuxième tige incisive (11) est disposée de manière à pouvoir être appliquée à ou de manière écartée par rapport à la au moins une couronne dentaire de mâchoire inférieure à l'opposé de la première tige incisive (10).

6. Dispositif (4) selon la revendication 4 ou 5, **caractérisé en ce que** la première tige incisive (10) et/ou la deuxième tige incisive (11) comporte le long de sa direction d'extension respectivement au moins un marquage (200) qui peuvent être saisis par un équipement de saisie pour la saisie univoque de positions des tiges incisives (10, 11), en particulier cependant que les marquages (200) sont disposés à des points d'intersection des tiges incisives (10, 11) ou à des points d'intersection entre une tige incisive (10; 11) et/ou les deux tiges incisives (10, 11) et le deuxième élément de relation intermaxillaire (7) ou le troisième élément de relation intermaxillaire (8) pour la saisie de leur position relative entre eux, et/ou les marquages (200) sont configurés pour la saisie analogique ou numérique.

7. Dispositif (4) selon une des revendications de 1 à 6, cependant qu'au moins un élément de relation intermaxillaire (6; 7; 8) comporte une section dorsale et une section ventrale qui sont reliées entre elles par l'intermédiaire d'une liaison articulée (300; 400), en particulier cependant que la liaison articulée (300; 400) est conçue de telle façon que la section distale du au moins un élément de relation intermaxillaire (6; 7; 8) peut être déplacé à au moins trois degrés de liberté.

8. Dispositif (4) selon la revendication 7, cependant que la partie dorsale (8E) du troisième élément de relation intermaxillaire (8) est, le long des couronnes dentaires de mâchoire inférieure, davantage prononcée dorsalement et latéralement et est jointive avec les surfaces occlusales des couronnes dentaires de mâchoire inférieure et/ou repose sur elles et/ou est adjacente à elles et/ou les entoure entièrement ou partiellement et/ou repose entièrement ou partiellement, par matériau d'empreinte, sur les surfaces occlusales et/ou est réversiblement jointe à elles.

9. Dispositif (4) selon une des revendications de 1 à 8, cependant que les zones de réception (5B-104, 5B-105) de la fourchette occlusale pour mâchoire supérieure (5) épargnent une zone (9) des couronnes dentaires frontales et/ou parties de couronnes dentaires frontales (Z12-Z22).

10. Dispositif (4) selon la revendication 9, cependant que les zones de réception (5B-104, 5B-105) de la fourchette occlusale pour mâchoire supérieure (5) épargnent en outre d'autres couronnes dentaires et/ou parties de couronnes dentaires disposées distalement par rapport aux couronnes dentaires frontales (Z12-Z22).

11. Dispositif (4) selon une des revendications de 9 à 10, cependant que la fourchette occlusale pour mâchoire supérieure (5) et le premier élément de relation intermaxillaire (6) sont réalisés sous forme intégrale.

12. Dispositif (4) selon une des revendications de 9 à 11, cependant que les zones de réception (5B-104, 5B-105) comportent, du côté tourné vers les couronnes dentaires de mâchoire supérieure à l'état placé, respectivement un évidement.

13. Dispositif (4) selon une des revendications de 9 à 12, cependant que les zones de réception (5B-104, 5B-105) comportent plusieurs petits trous traversants à leur surface périphérique.

14. Procédé de saisie de données de relation intermaxillaire d'un humain, en utilisant un dispositif (4) selon une des revendications précédentes, cependant qu'au moins un marquage (200) à l'élément d'application pour mâchoire supérieure (5), dans une zone limite vers les couronnes dentaires et/ou parties de couronnes dentaires, ainsi qu'à respectivement le premier au troisième élément de relation intermaxillaire (6; 7; 8) sont prévus, et en utilisant un scanner avec lequel les marquages (200) sont saisis par le scanner pour la saisie univoque de positions des éléments de relation intermaxillaire (6; 7; 8) pour la détermination de positions de relation intermaxillaire.

15. Procédé selon la revendication 14, cependant qu'au moins respectivement un marquage (200) est prévu à la première et/ou à la deuxième tige incisive (10, 11), lesquelles sont saisies par le scanner pour la saisie univoque de positions de la première et/ou de la deuxième tige incisive (10, 11) pour la détermination de positions de relation intermaxillaire, en particulier cependant que le procédé comporte les étapes suivantes :
(1) Détermination d'une première position de centre de la tête de mâchoire (12.r) par un enregistrement numérique actif de la relation intermaxillaire, lors duquel la mâchoire inférieure (2) exécute un mouvement de rotation dans le centre de la tête de l'articulation de mâchoire (12) :
(2) Détermination d'un premier parcours (13) entre le centre de la tête de l'articulation de mâchoire (12.r) et un point mésial prédéterminé à la mâchoire inférieure (2) ;
(3) Détermination d'un second parcours (15) entre le point mésial prédéterminé à la mâchoire inférieure (2) et un point distal (16) prédéterminé à la mâchoire inférieure (2);
(4) Détermination d'un angle (α) entre le premier parcours (13) et le second parcours (15) ;
(5) Détermination des positions du point mésial prédéterminé ainsi que du point distal prédéterminé par un mouvement de la mâchoire inférieure à l'aide d'un point de référence prédéterminé à la mâchoire inférieure (2) ;
(6) Détermination d'une seconde position du centre de la tête de l'articulation de mâchoire (12.p) à l'aide du premier et du second parcours (13, 15) ainsi que de l'angle (α) compris entre eux ; et
(7) Détermination d'un tracé de trajectoire de la tête de l'articulation de mâchoire (17).
